# EUROPEAN PATENT APPLICATION

(11) **EP 4 738 233 A1**
(43) Date of publication of application: **06.05.2026**
(21) Application number: 24831550.9
(22) Date of filing: 29.05.2024
(51) Int. Cl.: G06Q 50/10

(54) **IMAGE TRANSMISSION/RECEPTION SYSTEM, OPERATION METHOD OF IMAGE TRANSMISSION/RECEPTION SYSTEM, AND PROGRAM**

(30) Priority: 30.06.2023 JP 2023108718
(71) Applicant: FUJIFILM Corporation, Tokyo 106-8620 (JP)
(72) Inventor: YAMAJI, Kei, Saitama-shi, Saitama 331-9624 (JP)
(74) Representative: Meissner Bolte Partnerschaft mbB
(86) International application number: PCT/JP2024/019680
(87) International publication number: WO 2025/004680

(57) **Abstract**

Provided are an image transmission/reception system that transmits and receives images in consideration of transmission-side information and reception-side information, an operation method of an image transmission/reception system, and a program. An image transmission/reception system according to an aspect of the present invention includes: an image transmission-side device; an image reception-side device; and a transmission/reception control device, in which the image transmission-side device captures an image of a subject to acquire the image, and transmits the acquired image to the transmission/reception control device, the image reception-side device receives input of identification information of a specific person who is a person whose image a user of the image reception-side device desires to view, and transmits the identification information of the specific person to the transmission/reception control device, and based on the identification information of the specific person, identification information of a person who captures the image, identification information of the subject captured in the image, and attribute information of the user of the image reception-side device, the transmission/reception control device extracts an image from the image received from the image transmission-side device, and allows the user to view the extracted image.

## Description

### BACKGROUND OF THE INVENTION

### 1. Field of the Invention

The present invention relates to an image transmission/reception system that transmits and receives an image, an operation method of an image transmission/reception system, and a program for operating a terminal device used in an image transmission/reception system.

### 2. Description of the Related Art

For example, JP2004-199666A discloses a technology of extracting an image in which a target subject is captured and transmitting the extracted image to a user.

### SUMMARY OF THE INVENTION

One embodiment according to the technology of the present disclosure provides an image transmission/reception system that transmits and receives images in consideration of transmission-side information and reception-side information, an operation method of an image transmission/reception system, and a program for operating a terminal device used in an image transmission/reception system.

A first aspect of the present invention relates to an image transmission/reception system comprising: an image transmission-side device; an image reception-side device; and a transmission/reception control device, in which the image transmission-side device captures an image of a subject to acquire the image, and transmits the acquired image to the transmission/reception control device, the image reception-side device receives input of identification information of a specific person who is a person whose image a user of the image reception-side device desires to view, and transmits the identification information of the specific person to the transmission/reception control device, and based on the identification information of the specific person, identification information of a person who captures the image, identification information of the subject captured in the image, and attribute information of the user of the image reception-side device, the transmission/reception control device extracts an image from the image received from the image transmission-side device, and displays the extracted image on the image reception-side device. In the first aspect and in each of the aspects described below, the "specific person" may be a single person or a plurality of persons.

A second aspect of the present invention relates to the image transmission/reception system according to the first aspect, in which the transmission/reception control device extracts an image in which the specific person is captured as a subject by comparing the identification information of the specific person with the identification information of the subject captured in the image.

A third aspect relates to the image transmission/reception system according to the second aspect, in which the transmission/reception control device recognizes a subject in the received image by using a recognizer constructed by a machine learning algorithm, and acquires identification information of the subject by the recognition.

A fourth aspect relates to the image transmission/reception system according to any one of the first to third aspects, in which the transmission/reception control device extracts an image in which the specific person is the person who captures the image by comparing the identification information of the person who captures the image with the identification information of the specific person.

A fifth aspect relates to the image transmission/reception system according to any one of the first to fourth aspects, in which the image transmission-side device receives input of the identification information of the person who captures the image, and transmits the identification information of which the input is received and the image to the transmission/reception control device in association with each other.

A sixth aspect relates to the image transmission/reception system according to any one of the first to fifth aspects, in which the transmission/reception control device sets a priority for the extracted image based on whether or not identification information of a subject in the extracted image matches the identification information of the specific person, and displays the extracted image in accordance with the priority.

A seventh aspect relates to the image transmission/reception system according to any one of the first to sixth aspects, in which the transmission/reception control device increases the priority in a case where the identification information of the person who captures the image matches the identification information of the specific person, as compared with a case where the identification information of the person who captures the image does not match the identification information of the specific person.

An eighth aspect relates to the image transmission/reception system according to any one of the first to seventh aspects, in which the transmission/reception control device processes the image based on the attribute information of the user, and displays the processed image on the image reception-side device.

A ninth aspect relates to the image transmission/reception system according to any one of the first to eighth aspects, in which the transmission/reception control device displays the image on the image reception-side device in different forms before and after the user decides to purchase the image.

A tenth aspect relates to the image transmission/reception system according to any one of the first to ninth aspects, in which the image transmission-side device receives input of a period during which the image is displayed on the image reception-side device, and transmits the period to the transmission/reception control device in association with the image, and the transmission/reception control device displays the image on the image reception-side device during the period.

An eleventh aspect relates to the image transmission/reception system according to the tenth aspect, in which the transmission/reception control device displays the image on the image reception-side device during the period in different forms in accordance with an elapsed time from a start of the period.

A twelfth aspect relates to the image transmission/reception system according to the tenth or eleventh aspect, in which the transmission/reception control device displays an image that is purchased and printed by the user on the image reception-side device even after a lapse of the period.

A thirteenth aspect relates to the image transmission/reception system according to any one of the first to twelfth aspects, in which the transmission/reception control device displays the image on the image reception-side device in different forms in accordance with an attribute of the user.

A fourteenth aspect relates to the image transmission/reception system according to any one of the first to thirteenth aspects, in which the image transmission-side device receives input of additional information for the image, and transmits the additional information to the transmission/reception control device, and the transmission/reception control device displays the image and the additional information on the image reception-side device in association with each other.

A fifteenth aspect relates to the image transmission/reception system according to any one of the first to fourteenth aspects, in which the image transmission-side device transmits an image for which transmission is approved by a person having approval authority to the transmission/reception control device.

A sixteenth aspect relates to the image transmission/reception system according to any one of the first to fifteenth aspects, in which the transmission/reception control device designates an allowable number of prints for an image purchased by the user, and the image reception-side device causes a printer to print the image purchased by the user within the allowable number of prints. In a case where the printing fails, the number of times of printing operations may be excluded from the count.

A seventeenth aspect relates to the image transmission/reception system according to the sixteenth aspect, in which the image reception-side device causes a printer that uses an instant film to print the image purchased by the user.

An eighteenth aspect relates to the image transmission/reception system according to any one of the first to seventeenth aspects, in which the image reception-side device receives input of a message for an image purchased by the user, and transmits the message to the transmission/reception control device, and the transmission/reception control device displays the message on the image transmission-side device in association with the image.

A nineteenth aspect of the present invention relates to an operation method of an image transmission/reception system including an image transmission-side device, an image reception-side device, and a transmission/reception control device, the operation method comprising: causing the image transmission-side device to capture an image of a subject to acquire the image, and transmit the acquired image to the transmission/reception control device; causing the image reception-side device to receive input of identification information of a specific person who is a person whose image a user of the image reception-side device desires to view, and transmit the identification information of the specific person to the transmission/reception control device; and causing the transmission/reception control device, based on the identification information of the specific person, identification information of a person who captures the image, identification information of the subject captured in the image, and attribute information of the user of the image reception-side device, to extract an image from the image received from the image reception-side device, and display the extracted image on the image reception-side device. The operation method according to the nineteenth aspect may comprise a configuration corresponding to the image transmission/reception system according to the second to eighteenth aspects.

A twentieth aspect of the present invention relates to a program for operating a terminal device and causing the terminal device to execute: a function of receiving input of identification information of a specific person who is a person whose image a user of the terminal device desires to view, and transmitting the identification information of the specific person to a transmission/reception control device; and a function of displaying an image extracted by the transmission/reception control device based on the identification information of the specific person, identification information of a person who captures the image, identification information of a subject captured in the image, and attribute information of the user on the terminal device.

A twenty-first aspect relates to the program according to the twentieth aspect, in which the program causes the terminal device to further execute a function of causing a printer to print an image purchased by the user within an allowable number of prints designated by the transmission/reception control device. The program according to the twentieth and twenty-first aspects may further comprise a configuration corresponding to the image transmission/reception system according to the second to eighteenth aspects. For example, in a case where the printing fails, the number of times of printing operations may be excluded from the count, and the printer may be limited to the printer that uses the instant film. Additionally, a non-transitory tangible recording medium on which computer-readable code of the programs of these aspects is recorded can also be provided as an aspect of the present invention.

### BRIEF DESCRIPTION OF THE DRAWINGS

FIG. 1 is a diagram illustrating a configuration of an image distribution system according to a first embodiment.
FIG. 2 is a diagram illustrating a configuration of a server apparatus.
FIG. 3 is a diagram illustrating a functional configuration of a processor of the server apparatus.
FIG. 4 is a diagram illustrating configurations of a celebrity terminal device and a user terminal device.
FIG. 5 is a diagram illustrating a processing flow of the image distribution system (1/2).
FIG. 6 is a diagram illustrating the processing flow of the image distribution system (2/2).
FIG. 7 is a diagram illustrating an example of image display content on the user terminal device.
FIGS. 8A and 8B are diagrams illustrating an image processing example.
FIG. 9 is another diagram illustrating the image processing example.
FIG. 10 is a diagram illustrating an example of an initial screen of the user terminal device.
FIG. 11 is a diagram illustrating another example of the initial screen of the user terminal device.
FIG. 12 is a diagram illustrating still another example of the initial screen of the user terminal device.
FIG. 13 is a diagram illustrating an example of a screen for displaying information on a celebrity.
FIG. 14 is a diagram illustrating a state where a time-limited photo is distributed.
FIG. 15 is a diagram illustrating a state where a user is encouraged to register as a premium member.
FIG. 16 is a diagram illustrating a screen example during photo printing.
FIG. 17 is a diagram illustrating a screen example in a case where printing of the photo is completed.
FIG. 18 is a diagram illustrating a list of photos for which the user is encouraged to print by the celebrity followed by the user.
FIG. 19 is a diagram illustrating an example of a screen for notifying of the distribution of the time-limited photo.
FIG. 20 is a diagram illustrating an example of a screen for searching for and determining the celebrity followed by the user.
FIG. 21 is a diagram illustrating a screen example of a personal page of the user.
FIG. 22 is a diagram illustrating an example of a screen for managing the celebrity followed by the user.
FIG. 23 is a diagram illustrating an example of a screen for a manager of the celebrity to set an account.
FIG. 24 is a diagram illustrating an example of a screen for the celebrity to set the account.
FIG. 25 is a diagram illustrating another example of the screen for the celebrity to set the account.
FIG. 26 is a diagram illustrating an example of a screen for the celebrity to post the photo.
FIG. 27 is a diagram illustrating another example of the screen for the celebrity to post the photo.
FIG. 28 is a diagram illustrating an example of a screen for registering the photo.
FIG. 29 is a diagram illustrating an example of a screen for setting information necessary for registering the photo.
FIG. 30 is a diagram illustrating an example of list display of photos pending approval.
FIG. 31 is a diagram illustrating an example of a screen for checking registration content of the photo.
FIG. 32 is a diagram illustrating another example of the screen for checking registration content of the photo.
FIG. 33 is a diagram illustrating an example of a screen for requesting correction of the registration content of the photo.
FIG. 34 is a diagram illustrating an example of a photo preview screen.

### DESCRIPTION OF THE PREFERRED EMBODIMENTS

### [Situation Assumed in Present Embodiment]

In the present embodiment, a situation in which "The celebrity captures an image of himself/herself or a friend (a member of the same group or the like) at a live concert, a photography session, or another event and distributes the image, and a user (fan of the celebrity) views and purchases the image" or a situation in which "The staff member such as a manager captures an image of the celebrity instead of the celebrity himself/herself and distributes the image" will be assumed. In such a situation, fans of the celebrity may, in addition to the group as a whole, particularly and enthusiastically support a specific member of the group. In addition, such a "specific member who is particularly and enthusiastically supported by the fans" (specific person) may be called "favorite", "favorite person", or "favorite member" of each fan, and supporting such a specific member may be called "support". In addition, in a case of the celebrities who work in a group or a team, supporting the whole group or the whole team may be called "group-wide support". Furthermore, activities in which fans support their "favorite" (for example, attending events or purchasing name-bearing merchandise) are sometimes referred to as "fan activities". In the following description and the accompanying drawings, the term such as "favorite" may be used in this sense.

In addition, in the following description, the term "celebrity" is used, but a range of a person indicated by this term can be widely understood. Specifically, the "celebrity" includes so-called "idols" who appear at live concerts and various events to perform singing, dancing, and the like, but is not limited thereto, and may also mean singers, stars, actors, actresses, performers, comedians, television personalities (individuals who host or present programs), celebrities, and the like who appear in television programs, online streaming programs, films, stage productions, and the like. Further, the "celebrity" may be an athlete such as a baseball player or a soccer player. The "celebrity" may be a person who works alone or may belong to a group composed of a plurality of members, regardless of age and gender. In a case of considering the manager and other staff members in addition to the celebrity himself/herself, the term "celebrity or the like" is used below. In addition, in the following description and the accompanying drawings, the full name of the celebrity or the like, the group name, and the full name of the user may be described, but all of these are fictitious.

### [Problems in Image Distribution System in Related Art]

In the above-described situation, in a case of distributing images, in a case where images are distributed for many celebrities without distinguishing individual members, the user will spend time and effort to select an image in which the specific member supported by the user (the "favorite" described above; the specific person) is depicted as the subject. Further, the user may also want an image in which the specific member is captured or an image captured from the viewpoint of the specific member, in addition to the image in which the specific member is captured. Meanwhile, a service provider may want to provide different services (the number of images that can be purchased, the quality of the image, and the like) in accordance with attribute information (membership type, rank, and the like) of the user. However, the related art does not distribute an optimal image in consideration of such various conditions.

The present inventor has conducted intensive studies in consideration of such circumstances, and has obtained an idea of the present invention. Hereinafter, specific aspects of an image transmission/reception system, an operation method of an image transmission/reception system, and a program according to the embodiments of the present invention will be described with reference to the accompanying drawings.

### [First Embodiment]

### [Configuration of Image Distribution System]

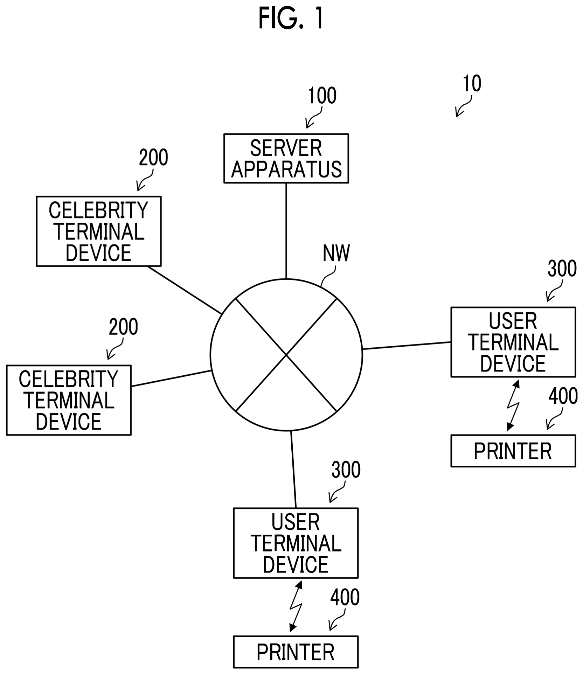

FIG. 1 is a diagram illustrating an overall configuration of an image distribution system 10 (image transmission/reception system) according to a first embodiment. The image distribution system 10 comprises a server apparatus 100 (transmission/reception control device), a celebrity terminal device 200 (image transmission-side device), and a user terminal device 300 (image reception-side device, terminal device), and these devices are connected to each other via a network NW. The connection may be wireless or wired. A printer 400 (printer) is connected to the user terminal device 300. In the image distribution system 10, a plurality of server apparatuses 100 may be present, and, in this case, the load may be distributed to the plurality of server apparatuses. In addition, one or more celebrity terminal devices 200 and one or more user terminal devices 300 may be present.

The image distribution system 10 transmits and receives the images to and from the celebrity terminal device 200 and the user terminal device 300 by the above-described configuration, and distributes the image of the celebrity to the user. In the present embodiment, the image distributed in this way, additional information such as a comment on the image, an article such as a film on which the image and the additional information are printed, or the entire service by the image distribution system 10 may be collectively referred to as a "photo". The "photo" may be replaced with a name (for example, "Instax" (registered trademark) manufactured by FUJIFILM Corporation) of a photo-related product or service.

### [Meaning of "User" in Present Embodiment]

In the present embodiment, the fan who views, purchases, or prints the photo (image) is a "user" of the image distribution system 10 and the service thereof, but other users of the image distribution system 10 or the service thereof, that is, the celebrity, the manager, and the other staff member who distribute the image can also be referred to as "users". However, in the present embodiment, for convenience of description, the term "user" is used without limitation to mean a "fan who supports the celebrity" or a "user of the user terminal device 300".

### [Configuration of Server Apparatus]

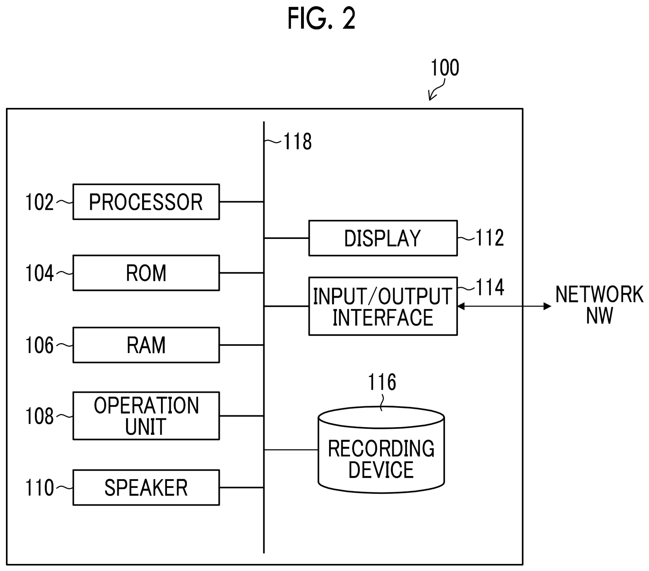

FIG. 2 is a diagram illustrating a configuration of the server apparatus 100 (transmission/reception control device). As illustrated in the same drawing, the server apparatus 100 comprises a processor 102 (processor), a read only memory (ROM; non-transitory tangible recording medium) 104, a random access memory (RAM) 106, an operation unit 108, a speaker 110, a display 112, an input/output interface 114, and a recording device 116, and these components are connected to each other by a bus 118 and perform communication as necessary. Further, the server apparatus 100 communicates with the celebrity terminal device 200 and the user terminal device 300 via the input/output interface 114 and the network NW under the control of the processor 102.

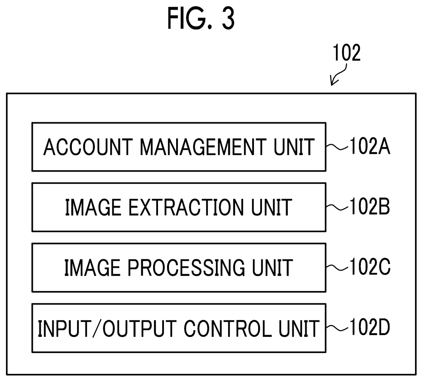

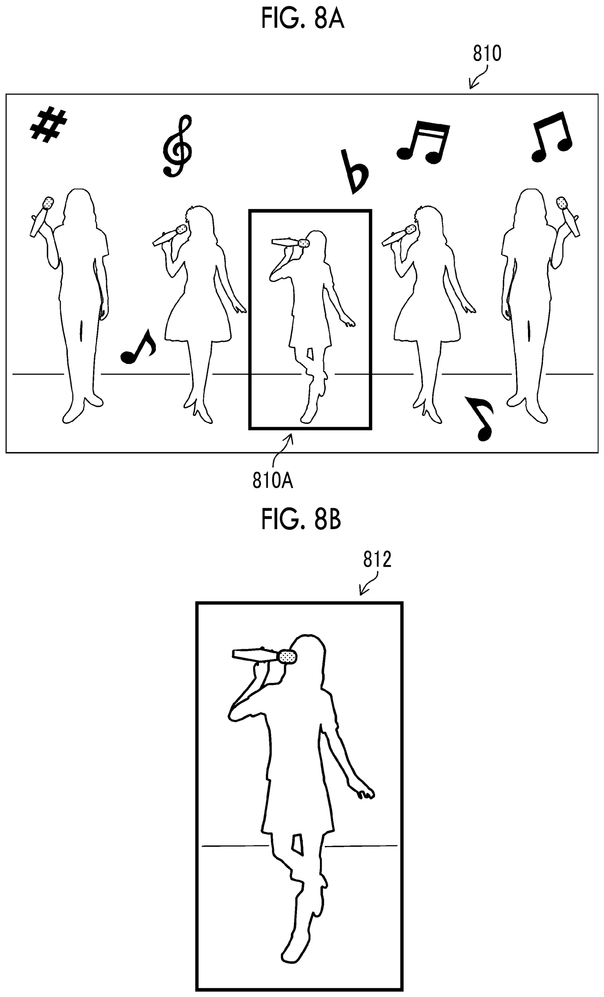

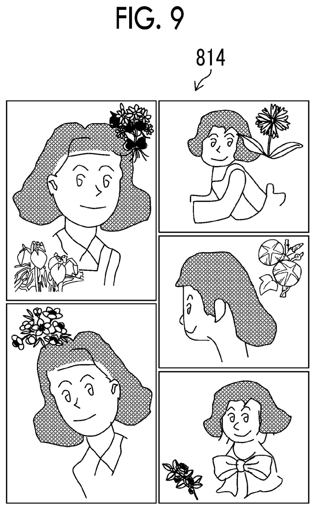

FIG. 3 is a diagram illustrating a functional configuration of the processor 102. Hereinafter, an outline of these functions will be described. An account management unit 102A performs registration, deletion, change of registration information, billing, point management, and the like for the accounts of the celebrity and the user. An image extraction unit 102B extracts an image from an image posted by the celebrity (an image received from the celebrity terminal device 200 by the server apparatus 100; the "photo" described above) based on the identification information of the celebrity. An image processing unit 102C performs image processing (for example, see FIGS. 8A and 8B and FIG. 9 described later) on the extracted image based on an instruction or the attribute information of the user. An input/output control unit 102D controls communication with the celebrity terminal device 200 and the user terminal device 300 via the input/output interface 114, performs transmission and reception of account information or the image, display control, and the like, and controls input and output of information with the recording device 116.

For example, the processor 102 is configured by various processors or electric circuits such as a central processing unit (CPU), a graphics processing unit (GPU), a field programmable gate array (FPGA), and a programmable logic device (PLD). The functions of the processor 102 need not always correspond one-to-one to the processors and electric circuits. A plurality of functions may be executed by one processor or the like, and one function may be executed by a plurality of processors or the like. In a case where these processors or electric circuits execute software (program), computer-readable code of software to be executed is stored in a non-transitory tangible recording medium such as the ROM 104, and the computer refers to the software. The term "computer" means, for example, various processors or electric circuits constituting the processor, and/or a combination thereof.

The software stored in the non-transitory tangible recording medium includes a program that performs transmission and reception of the image, image extraction, image processing, and the like, and data used in the execution of the program. The code may be recorded on a non-transitory tangible recording medium such as a flash ROM or an electronically erasable and programmable read only memory (EEPROM) instead of the ROM 104. The "non-transitory tangible recording medium" does not include intangible recording media such as carrier-wave signals or propagated signals themselves. In processing using the software, the RAM 106 is used as a temporary storage area or a work area.

Processing using the processor 102 having the above-described configuration will be described in detail later.

### [Configuration of Recording Device]

The recording device 160 is configured by a recording medium (non-transitory tangible recording medium) such as a hard disk, a semiconductor memory, and various magneto-optical recording media, and a control unit thereof, and records or stores various types of information. The information recorded in the recording device 160 includes the account information of the celebrity and the user, the image received from the celebrity terminal device 200, and the information on the celebrity (particularly, the celebrity who enthusiastically supports or the celebrity for which the user desires photo distribution; the above-described "favorite") who is followed by each user. In addition, the recording device 160 records the identification information and the attribute information in association with each other for the celebrity or the like and the user. The "identification information" is information for uniquely specifying a person, and is, for example, a full name, a stage name, or a nickname in a case of the celebrity or the like, and is, for example, an ID, a full name, or a registered name in a case of the user. The "attribute information" is, for example, whether the user is the celebrity himself/herself or the staff member such as the manager, a designation of a group or a subgroup (or the team) to which the celebrity belongs, or whether the user is a paid member or a free member. In a case where the identification information (full name or the like) of a certain person is given, the server apparatus 100 (processor 102) can know the attribute information of the person by referring to the recording device 160 with the identification information as a key. On the contrary, in a case where the attribute information (for example, whether the user is the celebrity himself/herself or the manager) is determined, the identification information of the person (not necessarily one person) having the attribute information can be extracted.

### [Configurations of Celebrity Terminal Device and User Terminal Device]

FIG. 3 is a diagram illustrating configurations of the celebrity terminal device 200 (image transmission-side device) and the user terminal device 300 (image reception-side device, terminal device). In FIG. 3 and the following description, reference numerals in the parentheses indicate the configuration of the user terminal device 300.

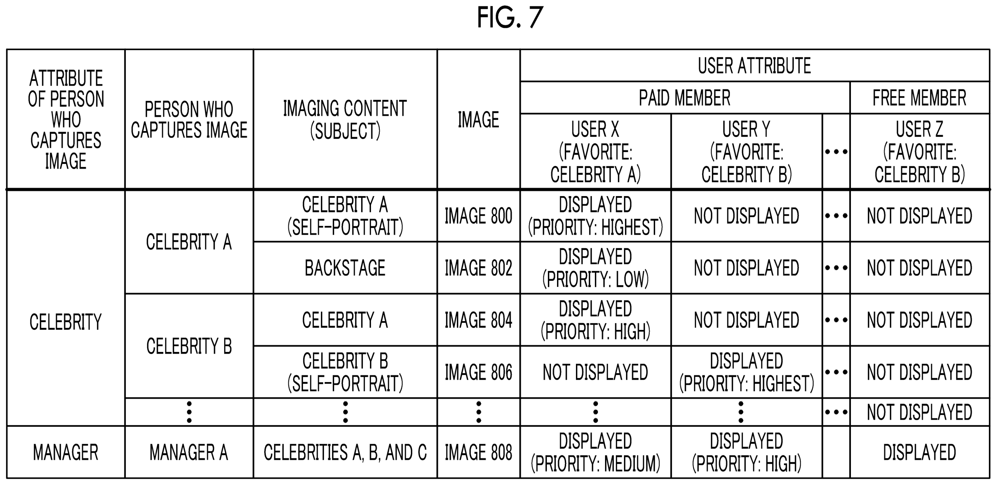

The celebrity terminal device 200 comprises a camera 202, a microphone 204, a speaker 206, a display 208, an operation unit 210, a processor 212, a communication interface 214, a memory card 216, a flash memory 218, and a RAM 220. The camera 202 captures an image of the celebrity himself/herself or another person as a subject to acquire the image. The subject is not limited to a person (for example, see a table in FIG. 7 described later). The captured image can be added with audio input via the microphone 204, and the input audio or the like can be output from the speaker 206. The captured image can be recorded in the memory card 216 that is attachable and detachable. The display 208 is a touch panel type display, and the user (celebrity) of the celebrity terminal device 200 can perform an operation such as tapping or flicking on the display 208. The operation unit 210 includes, for example, various buttons, switches, and the like, but the functions of these members may be executed by the display 208.

The processor 212 is configured by various processors and electric circuits as in the processor 102 described above, and manages various types of processing executed by the celebrity terminal device 200. In a case where the processor 212 performs processing, the program or the data stored in the flash memory 218 (non-transitory tangible recording medium) is referred to, and the RAM 220 is used as a temporary storage area and a work area. Communication between the celebrity terminal device 200 and the server apparatus 100 is performed via the communication interface 214.

### [Functions of Celebrity Terminal Device]

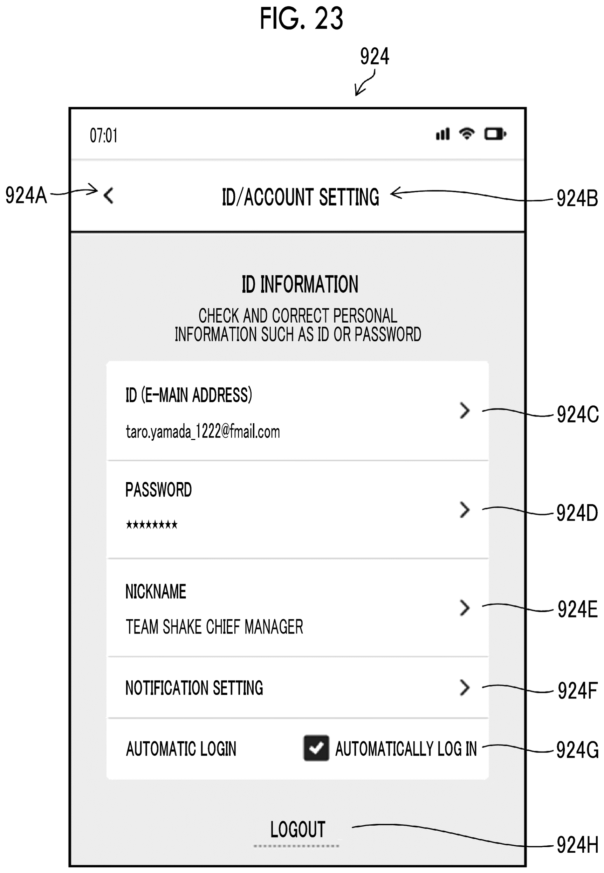

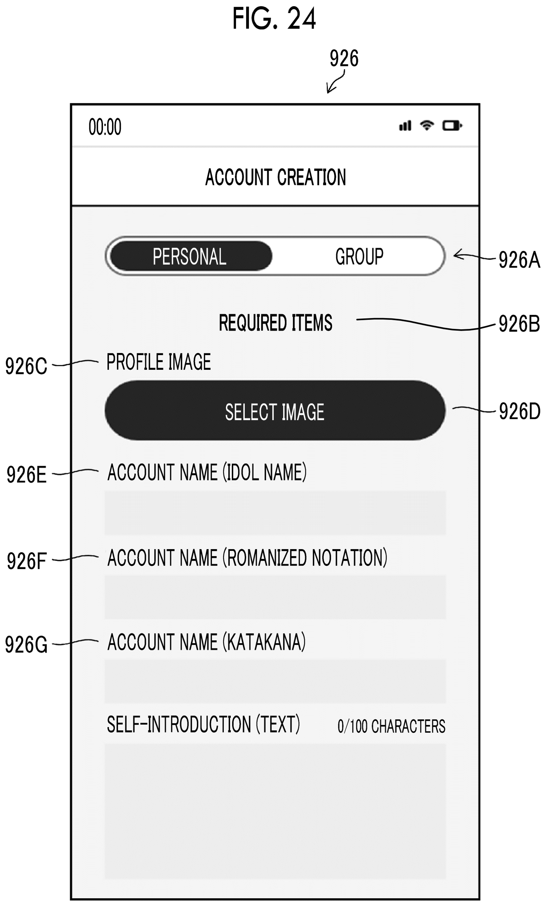

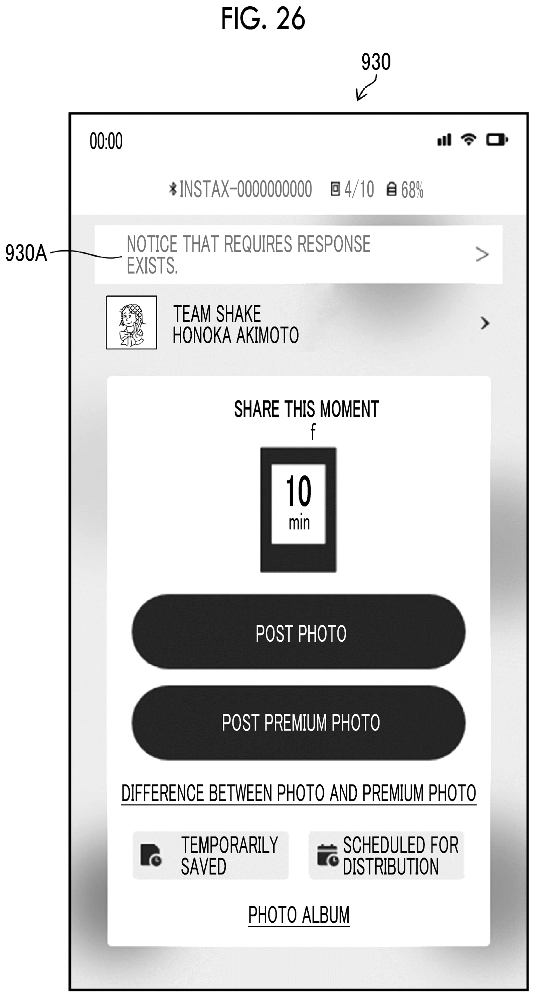

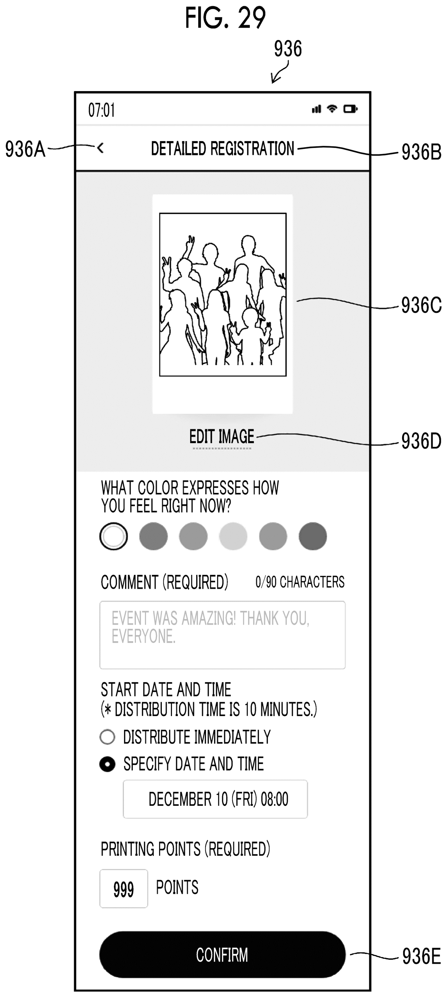

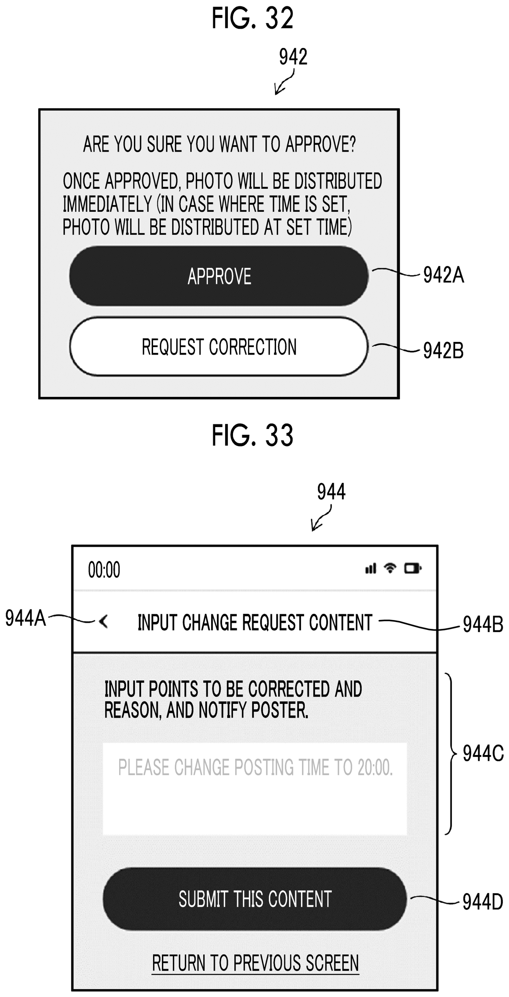

The program stored in the flash memory 218 has functions of registering, correcting, and deleting the account of the celebrity or the like (for example, see FIGS. 23 and 24), capturing, editing, and recording the image, and posting the photo (for example, see the examples in FIGS. 26 to 29), inputting a message or an emotional color (described later) for the photo (for example, see the example in FIG. 29), and viewing the comment or the reaction from the user. These functions can be executed by installing dedicated application software on a general smartphone, a tablet terminal, or the like. In addition to the celebrity himself/herself, the staff member such as the manager may use the celebrity terminal device 200. In this case, it is possible to install application software having different functions (for example, the presence or absence of approval authority for photos described later; see FIGS. 32 and 33) in accordance with whether the user of the terminal device is the celebrity himself/herself or the manager or the like (difference in the attribute information) or to restrict or release the functions of the same application software in accordance with the identification information or the attribute information.

### [Functions of User Terminal Device]

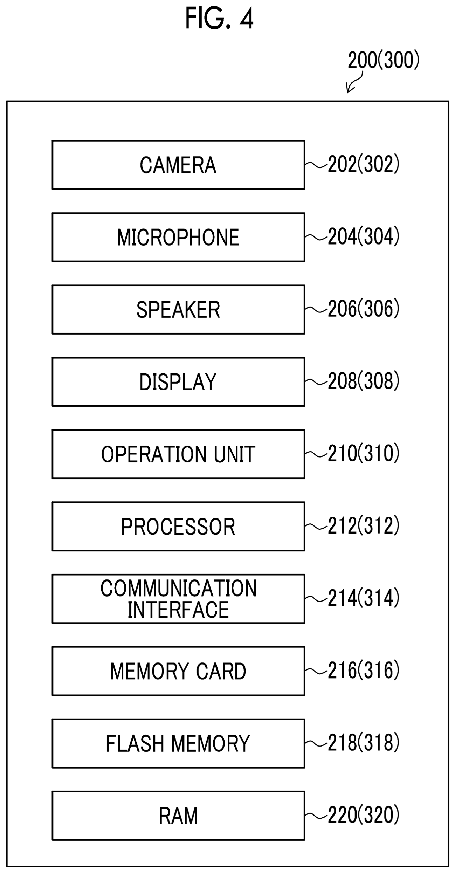

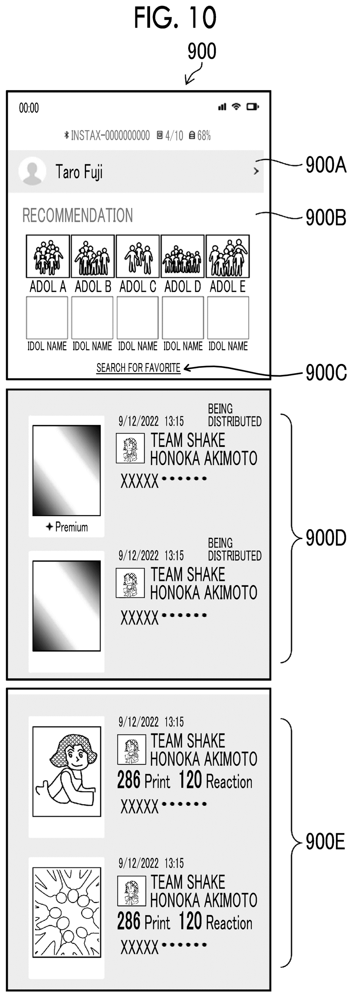

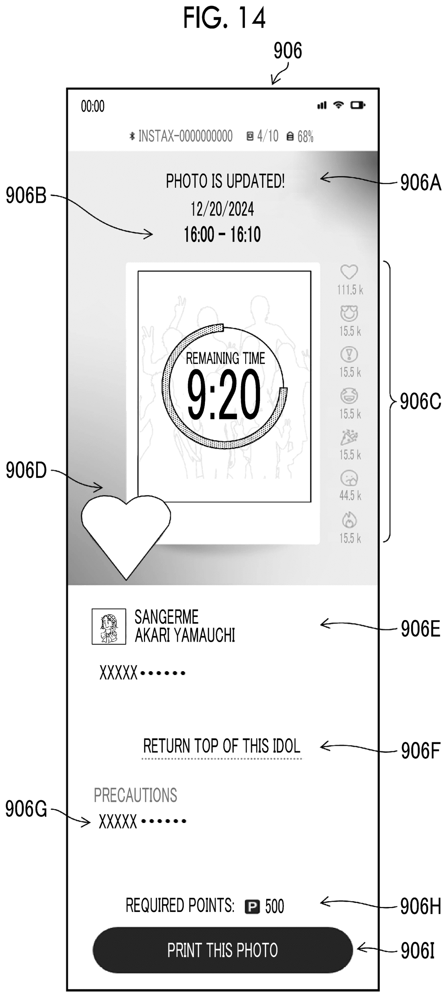

As illustrated in FIG. 4, the user terminal device 300 comprises a camera 302, a microphone 304, a speaker 306, a display 308, an operation unit 310, a processor 312, a communication interface 314, a memory card 316, a flash memory 318, and a RAM 320. The user can search for or set the celebrity (the above-described "favorite") to be followed (for example, see FIGS. 10 to 12, 21, and 22), view, purchase, or print the photo (for example, see FIGS. 14 to 19), and input the message or the reaction to the photo using the user terminal device 300. These functions of the user terminal device 300 can be executed by installing dedicated application software on a general smartphone, tablet terminal, or the like, as in a case of the celebrity terminal device 200.

### [Processing Flow of Image Distribution System]

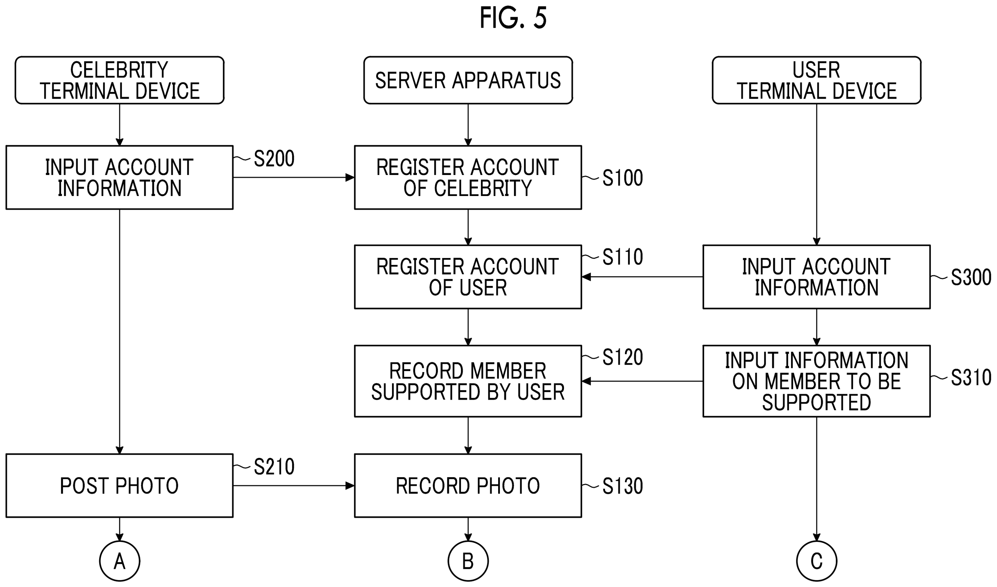

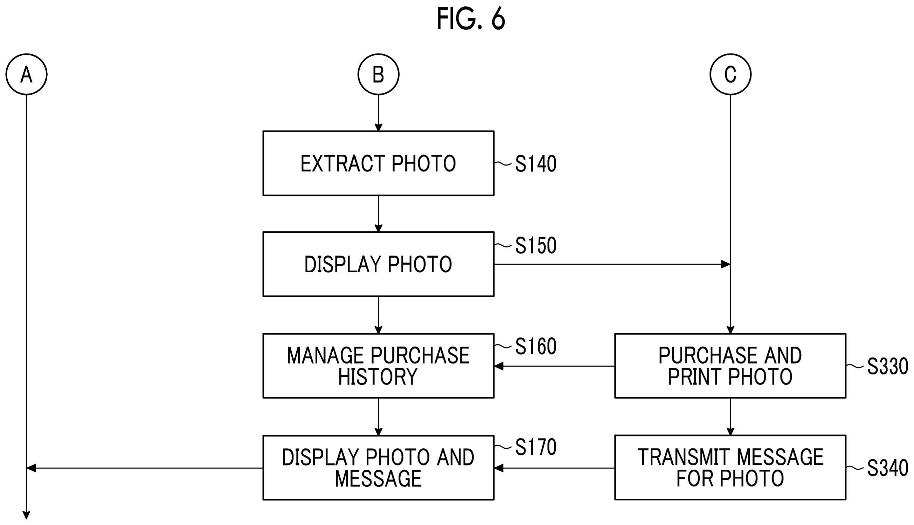

FIGS. 5 and 6 are diagrams illustrating a processing flow in the image distribution system 10. The following processing flow illustrates an example of processing, and the processing may be executed in a procedure different from this example. For example, an order of the communication between the celebrity terminal device 200 and the server apparatus 100 and the communication between the user terminal device 300 and the server apparatus 100 may be interchanged, or the necessary processing may be repeated. In addition, the server apparatus 100 may execute processing in parallel with the plurality of celebrity terminal devices 200 and the plurality of user terminal devices 300.

### [Registration of Account]

The celebrity or the like (as described above, the celebrity himself/herself or the staff member such as the manager) starts the application of the image distribution system and inputs the account information on the celebrity terminal device 200 (step S200). For example, as illustrated in FIG. 23, an ID such as an e-mail address, a password, a nickname, and the like are input. The server apparatus 100 registers the account of the celebrity or the like based on this information (step S100). Specifically, the server apparatus 100 records the identification information, the attribute information, the account information, and the like of the celebrity or the like in association with each other in the recording device 160. Similarly, the user (fan who supports the celebrity) inputs the account information on the user terminal device 300 (step S300), and the server apparatus 100 registers the account of the user based on this information (step S110).

### [Registration of Member to Be Supported]

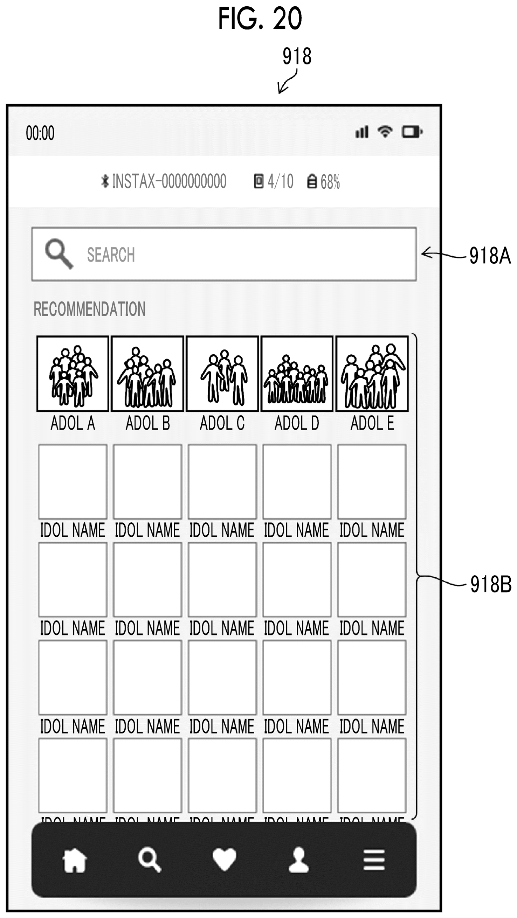

The user inputs the information on the member (the above-described "favorite") particularly supported by the user using the user terminal device 300. The registration may be performed for one or more persons, and a subgroup or a team constituting the group or the whole group may be registered (a plurality of groups may be registered). The input can be performed, for example, by tapping and selecting a preferred celebrity from list display in which the full name of the celebrity, the group name, and the representative photo are displayed as illustrated in FIGS. 10 to 12. In addition, a celebrity that is not displayed in the list may be searched for and selected (for example, by tapping a label 900C in FIG. 10, the screen transitions to a search screen of FIG. 20). The server apparatus 100 registers a member to be particularly supported by the user in response to the information input (step S120). The server apparatus 100 can register the identification information of the user and the identification information of the celebrity (the "favorite" of the user) in association with each other in the recording device 160.

### [Photo Posting]

The celebrity or the like captures an image of the subject with the camera 202 of the celebrity terminal device 200 to acquire the image, and posts the photo using the image. Specifically, the celebrity terminal device 200 transmits the image and the additional information such as the comment on the image to the server apparatus 100 (transmission/reception control device) (step S210). FIGS. 26 to 29 are examples of screens displayed on the display 208 of the celebrity terminal device 200 in a case of photo posting. In a case of photo posting, the celebrity or the like can check a layout of the photo as illustrated in FIG. 29, and can input a color (the "emotional color") representing the current feelings, the comment, and the like, and can designate a distribution start date and time, the printing point, and the like. The subject may or may not be a person (for example, a dressing room, a backstage, various small items, and the like). In addition, in a case of capturing an image of a person, the person may capture a his/her image (the person who captures the image is the subject; so-called "selfie" or "self-portrait"), or may capture an image of another celebrity or the like. The number of persons to be captured may be one or more.

### [Recognition of Subject]

The server apparatus 100 can acquire the identification information of the subject by analyzing the image received from the celebrity terminal device 200 and recognizing which person the subject in the image is. In addition, the server apparatus 100 may recognize the subject by using a recognizer constructed by a machine learning algorithm. Such a recognizer can be constructed by training a neural network such as a convolutional neural network (CNN) using, as training data, the image and the identification information of the subject. In addition, the server apparatus 100 may reflect the recognition of the subject in the analysis of the content of the comment added to the image by artificial intelligence. For example, in a case where the comment is "We took a photo with Mr./Ms. A!", it can be estimated that one of the plurality of persons is "Mr./Ms. A". The server apparatus 100 records the posted photo in the recording device 160 in association with the identification information of the person who captures the image and the identification information of the subject obtained by the recognition, and publicly displays the photo immediately after the posting or at the designated distribution date and time.

### [Approval in Case of Photo Posting]

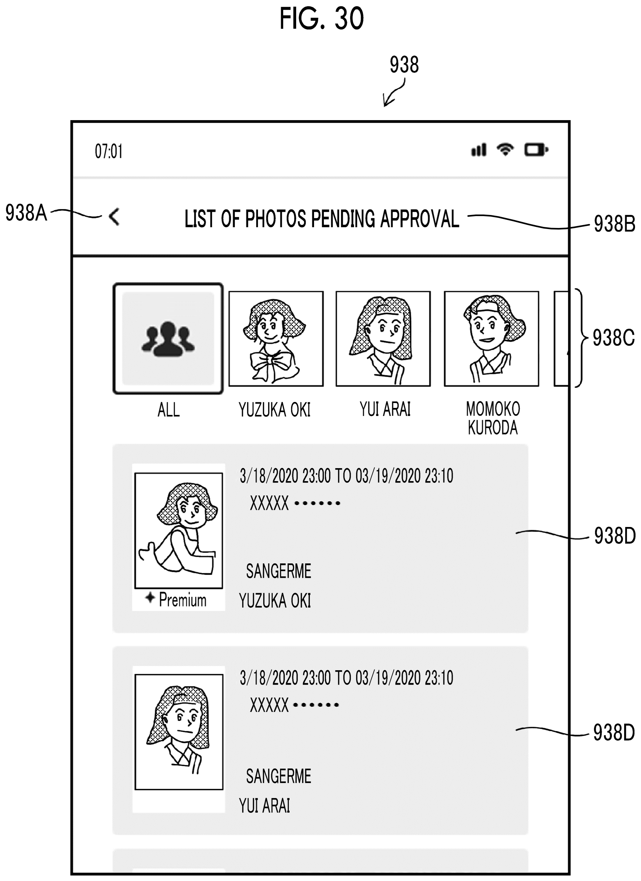

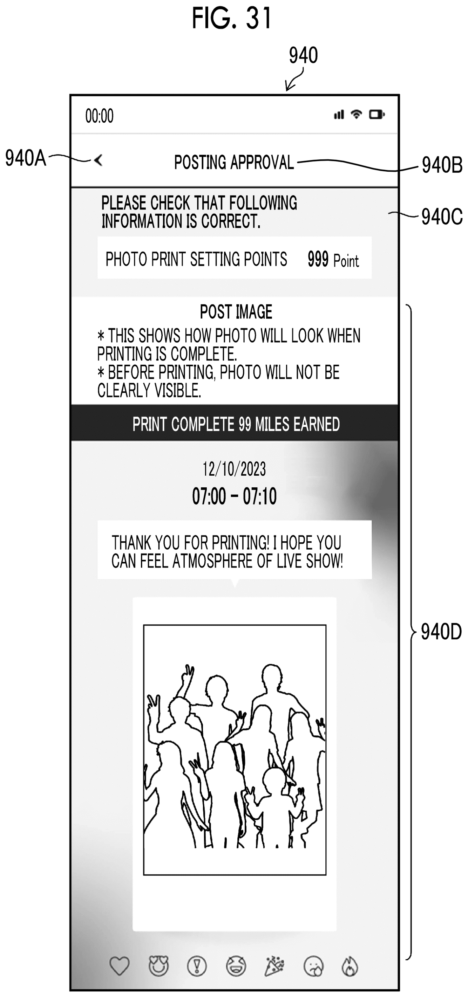

In a case where the celebrity posts the photo, the posting may be subject to approval by a person having approval authority, such as the manager. As illustrated in FIGS. 30 and 31, in a case where there is no problem in checking the content of the image or the comment, the distribution date and time, and the like, the person having approval authority can approve the posting as illustrated in FIG. 32, and can request the correction as illustrated in FIG. 33 as necessary. The person having approval authority can perform the approval using the celebrity terminal device 200.

### [Extraction and Display of Photo]

The server apparatus 100 extracts the photo based on the identification information of the celebrity (the above-described "favorite") to be particularly supported by the user from the photo (the photo received from the celebrity terminal device 200) posted by the celebrity or the like (step S140), and displays the photo on the user terminal device 300. In a case where the comment or the "emotional color" is added to the image, this information is also extracted and displayed. The server apparatus 100 can extract and display the photo immediately after the above-described approval (in a case where the distribution date and time is set, at the set date and time).

FIG. 7 is a diagram illustrating an example of the extraction and display of the image. First, regarding a user X, in the example illustrated in FIG. 7, since a celebrity A is the "favorite" (the celebrity who is particularly enthusiastically supported; a specific person) of the user X, the server apparatus 100 extracts the image in which the celebrity A is captured. The server apparatus 100 can compare the name or the like (identification information of the specific person) of the "favorite" input by the user with the identification information of the subject captured in the image, and extract the image with matching identification information. In addition, the server apparatus 100 may extract not only the image in which the celebrity A (the "favorite") is captured as the subject but also the image (the image from the viewpoint of the "favorite") in which the celebrity A is the person who captures the image. In such a case, as in an image 802, the image in which the subject is not a person may be extracted. The server apparatus 100 can compare the identification information of the person who captures the image with the identification information of the specific person ("favorite"), and extract the image in which the specific person is the person who captures the image. The identification information of the person who captures the image can be determined by the account information set on the celebrity terminal device 200.

Similarly, since a celebrity B is the "favorite" of a user Y, the server apparatus 100 can extract images 806 and 808 in which the celebrity B is the subject.

### [Service in Accordance with Attribute Information of User]

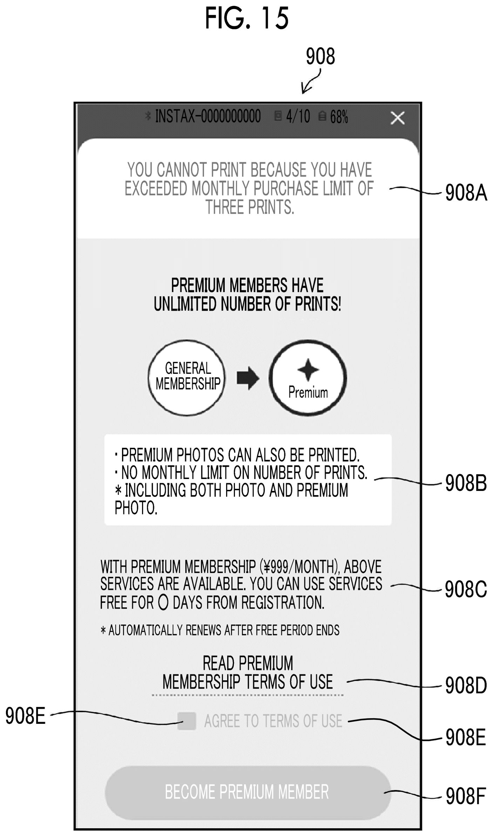

In the example illustrated in FIG. 7, the user X and the user Y are paid members. In this case, as described above, the user X and the user Y can view the image captured by the celebrity A or B (the celebrity himself/herself) and an image 808 captured by a manager C. On the other hand, a user Z is a free member. In this case, in the example illustrated in FIG. 7, the user Z can view only the image 808 captured by the manager C. As in this example, in the image distribution system 10 according to the present embodiment, different photos may be displayed on the user terminal device 300 in accordance with the attribute information of the user. In addition, for example, a difference may be provided in which the paid member can view both a "close-up" photo (photo in which the celebrity is captured close to the camera) and a "distant" photo (photo in which the celebrity is captured from a distance), but the free member can view only the "distant" photo. Whether the user is a paid member or a free member is an example of the attribute information. In addition, the paid member may be finely classified (for example, a regular member and a premium member), and the service content may be differentiated in accordance with the classification. For example, a type of a printable photo or the number of photos that can be purchased per month (the number of printable photos) can be differentiated (see FIG. 15 and the like described later).

The server apparatus 100 may process the image of the photo based on the attribute information of the user, such as the membership type, and display the processed image on the user terminal device 300. For example, the free member or the regular member cannot process the image, whereas the paid member or the premium member can process the image. FIGS. 8A and 8B and FIG. 9 are diagrams illustrating examples of the image processing. FIG. 8A illustrates a state where a portion (region 810A) in which the celebrity who is the "favorite" is captured is included in an image 810 in which a plurality of celebrities are captured, and FIG. 8B illustrates a state where the region 810A is enlarged to generate an image 812. A portion in which the celebrity who is the "favorite" is captured can be determined by the recognizer, the feature value extraction, and the like as described above. In addition, FIG. 9 illustrates a state where a plurality of images of the celebrity who is the "favorite" are combined and further decorated (here, a flower illustration is added). In a case of performing such combination, the server apparatus 100 may combine a plurality of images of the same celebrity captured at substantially the same time. For example, it is considered to combine a plurality of images in which the celebrity A is captured from different directions (front and oblique) by the celebrity B and the manager C. In addition, for example, the user may register his/her own image and may be able to combine the image of the celebrity with his/her own image. By such combination, the user can experience a feeling as though the user is captured together with the celebrity.

In addition, the server apparatus 100 can set a priority for the photo. For example, the server apparatus 100 can determine whether or not the identification information of the person who captures the image matches the identification information of the subject, and can set the highest priority for the image in which the identification information of the person who captures the image matches the identification information of the subject, that is, a photo of an image 800 in which the celebrity A captures himself/herself in the example illustrated in FIG. 7. The image 800 is an image in which the "favorite" is taking a so-called "selfie" or "self-portrait". Next, the server apparatus 100 can set a higher priority in the order of the image in which the identification information of the subject matches the identification information of the specific person (the image in which the "favorite" is captured as the subject), the image in which the identification information of the person who captures the image matches the identification information of the specific person (the image captured by the "favorite"), the image in which the subject is a person, and other images (see images 802 to 806). Further, the server apparatus 100 may allow the user to change the priority.

The server apparatus 100 can display the photo in accordance with the priority set in this manner. For example, the photo having a high priority can be displayed at a position near the top of the list display, or can be displayed in a large size.

In addition, the server apparatus 100 may change the display form on the user terminal device 300 as time elapses. For example, the resolution of the photo can be set to be low immediately after the start of the distribution, and the resolution can be increased in accordance with the elapsed time from the start of the distribution period (after the purchase, the photo is displayed at a normal resolution). By implementing such measures, it is expected that enthusiastic fans (users), thinking, for example, "I'd like to purchase the photo of the celebrity I support ("favorite") even in a case where I cannot check the photo in detail" or "I want to purchase the photo as early as possible", will purchase immediately after the start of distribution, whereas less enthusiastic fans, thinking "I will purchase after the photo becomes clearly displayed to check the contents", will purchase after a certain delay from the start of distribution, and thus the overall timing of purchases is dispersed, thereby achieving load leveling of the server apparatus 100. Similarly, the server apparatus 100 may vary the cost of purchasing photos (for example, price or points consumed) over time (for example, high cost immediately after the start of distribution and lower cost as time elapses).

### [Photo Purchase and Printing]

The user of the user terminal device 300 can view the photo displayed on the user terminal device 300 and can purchase and print a desired photo (step S330). The user cannot print the photo that is not purchased. The user can print the photo within a designated number of times (allowable number of prints), and the server apparatus 100 can set the allowable number of prints by the instruction input of the service provider. The printer that can print the photo may be limited to a type that uses the instant film. Such a limit can be placed by the application software installed on the user terminal device 300. The instant film is, for example, a self-developing instant film, in which one surface is an exposure surface and the other surface is an observation surface. An exposure region, a pod portion, and a trap portion are provided on the exposure surface, an observation region is provided on the observation surface, and the image is printed in the observation region. After the exposure, the instant film is subjected to the development treatment by spreading the development treatment liquid of the pod portion in the exposure region. In a case of transporting the instant film, a roller pair provided in the printer crushes the pod portion to spread the development treatment liquid.

In a case where the user fails to perform printing, the server apparatus 100 may exclude the number of failures from the count of the allowable number of prints.

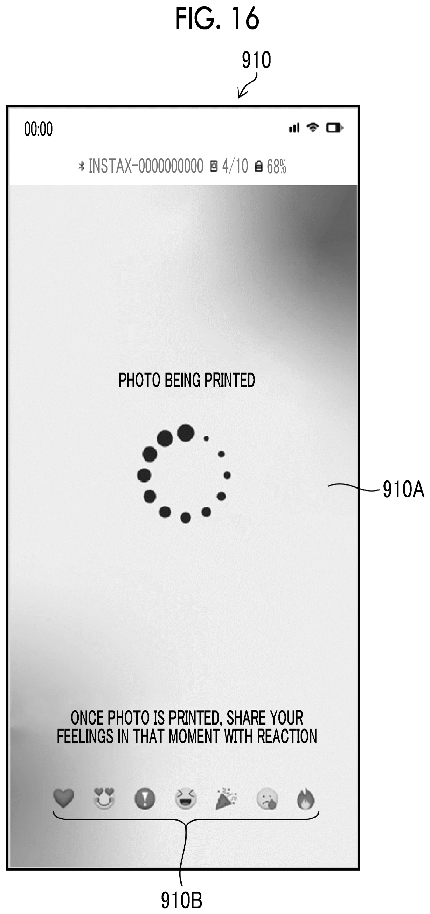

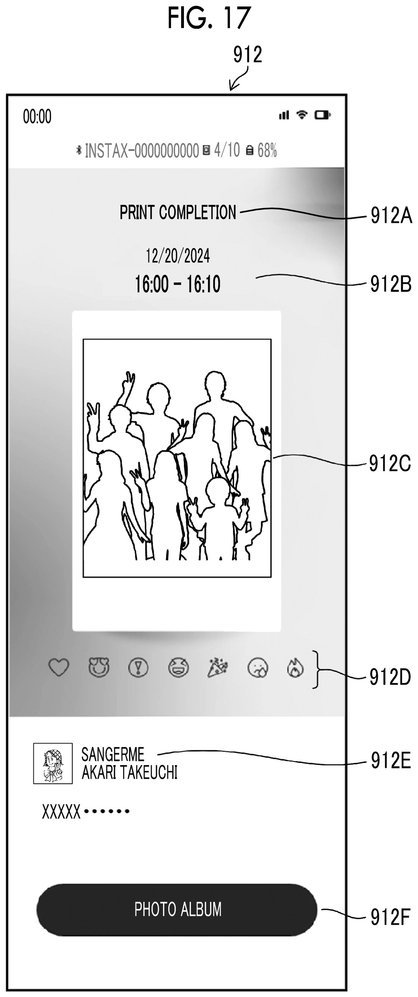

In a case where the photo can be printed, the user can input the message (comment, reaction, or the like) for the photo (step S340). For example, as will be described later with reference to FIGS. 16 and 17, the user can express his/her feelings (for example, moved, cool, cute, touching, funny, like, and the like) by tapping a reaction button. The user may be able to input the comment in text. The server apparatus 100 can display the message input by the user in association with the photo posted by the celebrity or the like on the celebrity terminal device 200 (step S 170), and as a result, the celebrity or the like can know the reaction of the user (fan). In addition, the server apparatus 100 can aggregate the messages (the number of reactions) input by the user and display the aggregation result on the photo (see the example illustrated in FIG. 14).

The server apparatus 100 can display the photo that is purchased and printed by the user on the user terminal device 300 even after a lapse of the distribution period. In addition, the server apparatus 100 may display the photo in different forms before and after the decision to purchase. For example, it is considered to display only a portion of the photo, blur the image, reduce the resolution, or superimpose text, a figure, or a symbol such as "not purchased" before the decision to purchase (see the examples illustrated in FIGS. 14 and 17).

In a case where the user purchases and prints the photo, the server apparatus 100 manages a purchase history (step S170). The server apparatus 100 can perform, for example, billing, consumption of points, granting of points, and updating of the number of prints per month. In addition, the server apparatus 100 may pay a reward to the celebrity or the like who has posted the photo or may grant points to the celebrity or the like in accordance with a purchase status of the photo by the user.

### [Screen Example]

Next, screen examples of the celebrity terminal device 200 and the user terminal device 300 will be described. In the following examples, a full name of the celebrity or the like, a group name, and a full name of the user may be described, but all of these are fictitious. In addition, in the practice of the present invention, the numerical values of fees and points may be different from the values in the following screen examples. In the drawing, a comment of the celebrity or the like is displayed as text in a portion described as "XXX ...".

### [Initial Screen of User Terminal Device]

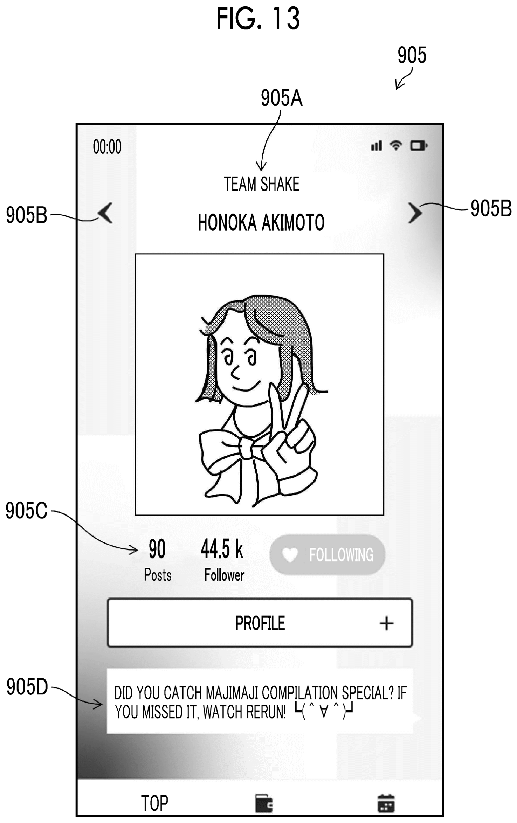

FIG. 10 is a diagram illustrating an example of an initial screen of the user terminal device 300 (image reception-side device, terminal device). In a screen 900, a region 900A is a region in which a full name of the user or a display name such as a nickname is displayed. In a case where a celebrity followed by the user or a celebrity particularly supported by the user ("favorite", "favorite person", or "favorite member" described above) is not registered, a representative image of the celebrity recommended by the system is displayed in the region 900B, and in a case where the user taps the representative image, the screen of the user terminal device 300 transitions to the screen of each celebrity (for example, see FIG. 13). The user terminal device 300 can display a plurality (for example, 10) representative images, and can display the representative images in descending order of the number of followers. In addition, in a case where the celebrity followed by the user is not registered, in a case where the user taps a label 900C displayed as "search for a favorite", the screen of the user terminal device 300 transitions to a state where the user can search for the celebrity (for example, see FIG. 20).

A photo being distributed (photo that has not been purchased and printed) is displayed in a region 900D. A photo purchased and printed by the user is displayed in a region 900E. The number of users who have purchased and printed each photo and the number of users who have reacted to the photo (posting a comment on the photo, selecting an icon indicating the feeling of the user, or the like) are displayed for each photo.

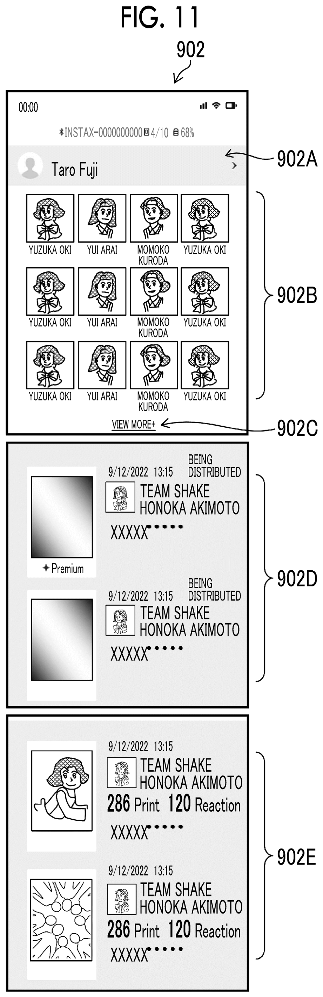

FIG. 11 is a diagram illustrating an example of an initial screen in a state where the celebrity to be followed by the user is registered. In a screen 902 illustrated in FIG. 11, as in the example illustrated in FIG. 10, a region 902A is displayed in which the full name of the user or the display name such as the nickname is displayed. In addition, the representative image of the celebrity followed by the user is displayed in a region 902B, and in a case where the user taps the representative image, the screen transitions to the screen of each celebrity (for example, see FIG. 13). It is preferable that, in a case where the update (the start of distribution of the new photo, the notification of the event, or the like) is performed since the previous viewing, the representative image of the celebrity is displayed with an identifying indication (by adding a mark or the like).

Even in a case where the celebrity followed by the user is registered, in a case where the user taps a label 902C displayed as "add a favorite", the screen transitions to a state where the user can search for the celebrity (for example, see FIG. 20).

As described above for the regions 900D and 900E, the photo being distributed and the photo that has been purchased and printed are displayed in regions 902D and 902E, respectively.

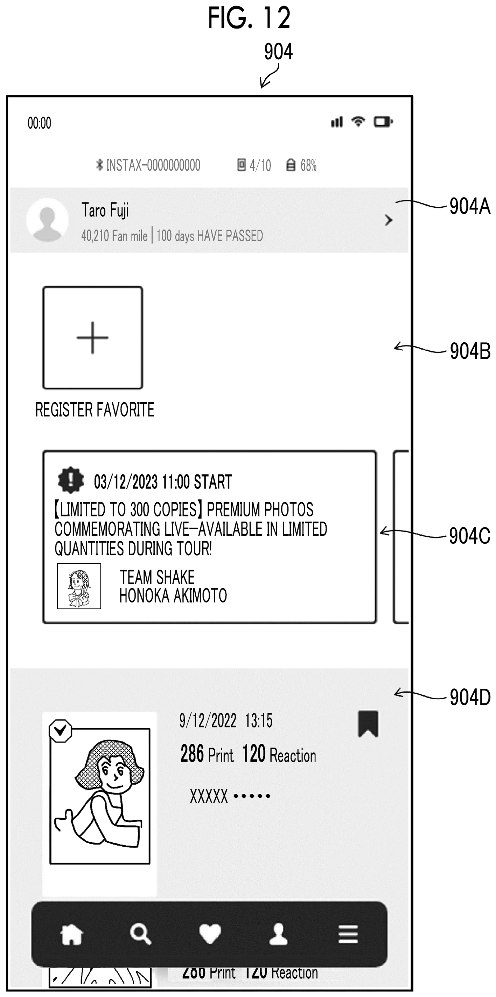

FIG. 12 is a diagram illustrating still another example of the initial screen of the user terminal device 300. In a screen 904 illustrated in FIG. 12, as in the example illustrated in FIGS. 10 and 11, a region 902A is displayed in which the full name of the user or the display name such as the nickname is displayed. In a case where the user taps a region 904B, the screen transitions to a screen for registering the celebrity to be followed. Information such as the notification of the event is displayed in a region 904C, and a list (may be plural lists) of Instax prints being distributed is displayed in the region 904D.

### [Screen for Each Celebrity]

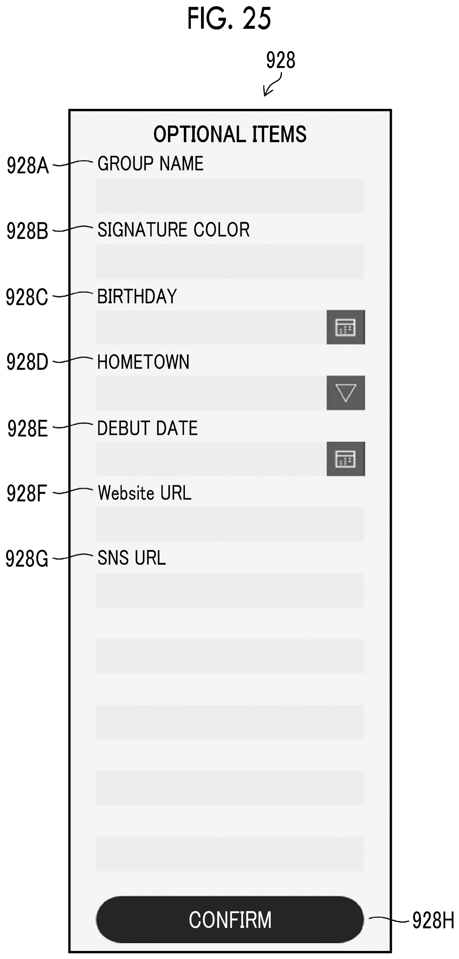

FIG. 13 is a diagram illustrating an example of a top screen for each celebrity in the user terminal device 300. The top screen shows information on the celebrity. In a screen 905 illustrated in the same drawing, a full name (or designation) of the celebrity and the group name, where applicable, are displayed in the region 905A. In a case where a left- or right-pointing arrow 905B is tapped, the screen transitions to the screen showing the information on the other celebrities. The number of distributions of the photo, the number of followers, and an icon indicating whether or not the user is following is displayed in the region 905C. In addition, in a case where "+" (addition or plus sign) in a region 905D is tapped, the region 905D is expanded and a profile of the celebrity is displayed. The displayed profile is, for example, information input on a screen illustrated in FIGS. 24 and 25 described later. In a case where the region 905D is expanded, the above-described cross mark changes to a "- (subtraction or minus sign)", and in a case where the "-" is tapped, the display of the profile is closed (collapsed). A message from the celebrity is displayed in a region 905E. In addition, the photos of the celebrity may be displayed in a list below the region 905E (not illustrated in FIG. 13).

FIG. 14 illustrates a screen of an individual photo of the celebrity in the user terminal device 300. The same drawing illustrates a state where the photo is uploaded and is in a state where the photo can be purchased and printed. In a screen 906 illustrated in FIG. 14, a notification that the photo is uploaded is displayed in a region 906A. A message may be changed between a normal photo and a special photo (premium photo). A distribution period of the photo (period in which the photo can be purchased and printed) is displayed in a region 906B.

A photo image is displayed in a region 906C with a frame. The photo image is in an ambiguous state before printing, and is clearly displayed after printing. In the present embodiment, a period during which the photo can be purchased and printed may be limited, and in the example illustrated in FIG. 14, a remaining time from the start of the distribution of the photo is displayed in a countdown manner in the region 906B. In a case where the count reaches zero, the display pattern is changed, and the fact that the photo cannot be purchased and printed is displayed. In addition, in the screen 906, the background of the photo is displayed in a color or a pattern selected by the user or the celebrity. In the premium photo, the background color or pattern may be varied from those used in the normal photo to create a sense of luxury.

The number of reactions to the photo by the users who have already performed printing is displayed in the region 906C. Different icons correspond to different reactions. In a region 906D, an icon (heart mark in the example illustrated in FIG. 14) of the reaction with the largest number among the reactions by the user who has already performed printing is displayed in a large size in a case where the screen 906 is opened by the user. A region 906E is a comment area, and a full name (or designation) of a sender (celebrity or the like), the affiliation (group name or the like), the representative image, and the comment are displayed.

In a case where the user taps a label 906F, the screen returns to the top screen of the celebrity (for example, the state illustrated in FIG. 13). Precautions are displayed in a region 906G in text or the like, and the points necessary for the photo purchase are displayed in a region 906H. In a case where the user taps a region 906I, the screen transitions to the screen for the photo purchase and printing.

A "persistent footer area" may be provided on the screen of FIG. 14. The persistent footer area includes, for example, the region 906H and the region 906I, and is always displayed at a lower part of the screen regardless of a scroll operation or the like.

### [Limit of Service Content in Accordance with Type of User]

In the present embodiment, a limit may be placed on the service content (for example, the number of photos that can be printed). The limit may be changed in accordance with a type or an attribute (for example, general member and premium member or bronze member, gold member, and platinum member; an aspect of attribute information) of the user. FIG. 15 is a diagram illustrating a screen example in a case where the number of prints of the user (here, it is assumed to be a general member) in the user terminal device 300 reaches a limit. In a screen 908, a message indicating that "The number of prints has reached the limit" and a message indicating that "Premium members have an unlimited number of prints" are displayed in a region 908A. In addition, a notification of the premium-membership service overview and promotional text regarding the premium membership monthly fee and free period are displayed in regions 908B and 908C. In a case where the user taps a label 908D, the terms of use of the premium membership are displayed, and a checkbox 908E is enabled (state where the checkbox 908E can be turned on/off). In a case where the user turns on the checkbox 908E, a region 908F is enabled, and the user can perform the procedure for the premium membership registration.

### [Screen during Photo Printing]

FIG. 16 is a diagram illustrating an example of a screen during photo printing in the user terminal device 300. A screen 910 is displayed after the purchase check is completed and the purchase is completed. In a case where the photo is printed on the instant film, it takes time, and thus it is preferable to display "printing" on the screen. Additionally, the timing of the start and completion of printing may be determined based on information from a printer body. In addition, in the screen of FIG. 16, a background of a region 910A and a color of a reaction button 910B can inherit the color set by the celebrity in the photo (color representing the emotion of the celebrity for the photo; also referred to as "emotional color"). The reaction button 910B on the screen 910 is used as means for prompting the user to tap on a next print completion screen, not for receiving the tapping on the screen 910. In a case where printing of the photo is completed, the screen of the user terminal device 300 transitions to the print completion screen illustrated in FIG. 17.

### [Print Completion Screen]

FIG. 17 is a diagram illustrating an example of the print completion screen (screen displayed in a state where printing of the photo by the printer body is completed) in the user terminal device 300. In a screen 912, a message indicating the print completion is displayed in the region 912A. The number of miles or points acquired by the user may be displayed together. A distribution date and time of the photo is displayed in a region 912B, and the printed photo is displayed with a frame in a region 912C. As in the examples illustrated in FIGS. 14 and 17, the photo before printing is not clearly displayed, and is clearly displayed for the first time after printing, so that the user can be motivated to purchase and print the photo. In addition, in a case where printing is performed, the result is reflected in an aggregation result of the number of prints illustrated in FIG. 12.

In addition, a reaction button 912D is displayed on the screen 912. As described above, in a case where printing of the photo is completed, the reaction button 912D can be tapped, and the user can express his/her feelings by the tapping. The result of the tapping is reflected in an aggregation result of the reaction illustrated in FIG. 12 or FIG. 14.

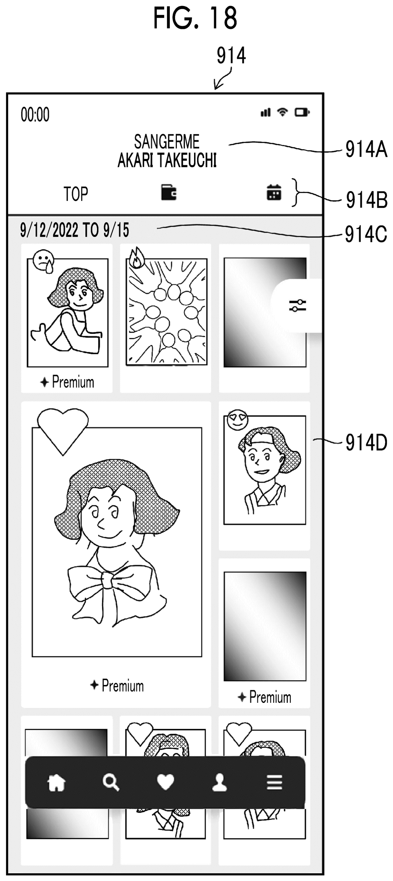

A region 912E of FIG. 17 is a comment region, and the full name or the designation of the sender (celebrity or the like), the affiliation, the representative image, and the comment are displayed. In a case where the user taps a region 912F, the screen of the user terminal device 300 transitions to a photo album (list of photos for which printing is recommended by the celebrity followed by the user; see FIG. 18).

### [Photo Album]

FIG. 18 is a diagram illustrating a screen display example of the photo album in the user terminal device 300. In a screen 914, the full name or the designation of the sender (celebrity), and the affiliation are displayed in a region 914A at the top. A region 914B is a fixed region, and icons indicating selectable menus are displayed. A region 914C is a region for displaying a date of the photo displayed on the screen, and is displayed in a fixed area by scrolling the screen (displayed in the same region of the screen). The date in the region 914C is changed in conjunction with the displayed photo.

The photos are displayed in a list in a region 914D. It is preferable to change a display form between the photo that is purchased and printed and the photo that is not purchased. For example, as described above, blurring may be turned on and off before and after purchase and printing, and a "not purchased" indication may be added or removed. In addition, in the region 914D, a premium photo is added with the display of "Premium". In addition, in the region 914D, the reaction with the largest number among the reactions of all users is displayed for each photo.

### [Example of Display Order of Photos Displayed in List]

An example of a display order of the photos displayed in a list will be described. The display is, by default, in reverse chronological order, and may be configured to display only the photos that have already been distributed (photos currently being distributed are not displayed). In addition, as illustrated in the example illustrated in FIG. 18, the photos are displayed in sets of three, in the order of "no enlargement", "enlarged and left-aligned", "no enlargement", and "enlarged and right-aligned". Only the purchased photo is to be enlarged, and the enlargement is not performed in a case where the purchased Instax print is not included in the three photos. In addition, in a case where there are two or more purchased photos, the newest photo is enlarged. In a case where the number of photos in the bottom row is less than three (only one or two), the photos in the row are not enlarged.

### [Details Screen of Each Photo]

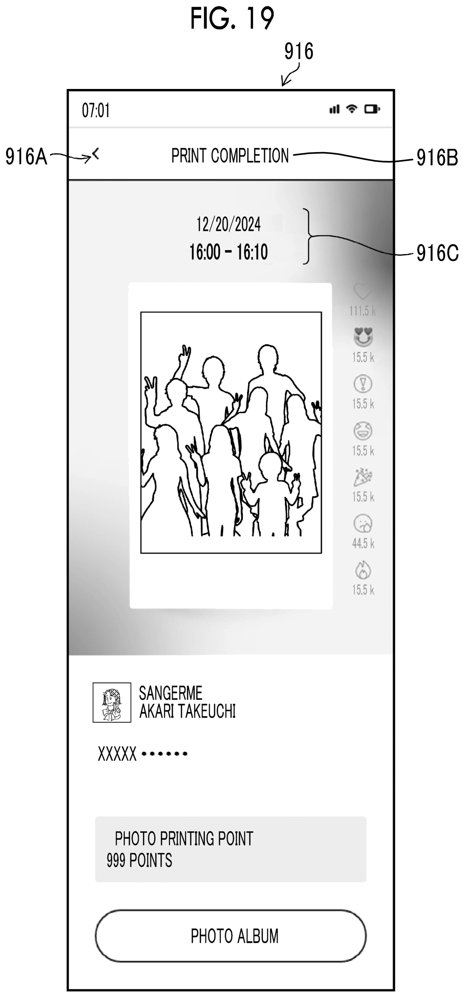

FIG. 19 is a diagram illustrating an example of a details screen of each photo. The screen transitions from a photo list screen or a calendar display screen to a screen 916. In a case where a button 916A is tapped on the screen 916, the screen returns to the original screen. A region 916B indicates a title of the screen 916. A region 916C shows the details of the photo, and the background color (displayed in the selected color), the distribution date and time, the image included in the photo (with a frame), and the reaction icon are displayed in common to the user side (fan side) and the celebrity side. The image displayed in the region 916C is a clear image in a case of having been purchased, and is an image with a blur that is not clearly visible in a case of having not been purchased. The full name (or designation) of the celebrity, the affiliation, the representative image, and the comment are displayed below the region 916C, and the points acquired by the user by printing the photo are displayed below the full name (or designation) of the celebrity, the affiliation, the representative image, and the comment (the illustrated numerical value is merely an example; the same applies hereinafter).

As described above, the screen 916 can be reached from a plurality of screens, but the screen can return to the original screen by tapping a button 916D.

### [Search for Celebrity to Be Followed]

FIG. 20 is a diagram illustrating an example of a screen (screen displayed on the user terminal device 300) for the user to search for the celebrity ("favorite") to be followed. A search box 918A is displayed at the top of a screen 918, and the user can search for the celebrity by the full name or the group name. The full name or the designation of the celebrity recommended (celebrity recommended by a service provider) for the user and the representative image are displayed below the search box 918A, and in a case where these are tapped, the screen transitions to the screen of each celebrity (for example, see FIG. 13). A plurality of recommended celebrities can be displayed, and can be sorted, for example, by follower count, by Japanese syllabary order, by alphabetical order, or by latest photo posts. The user may be able to select the display conditions.

### [Personal Page of User]

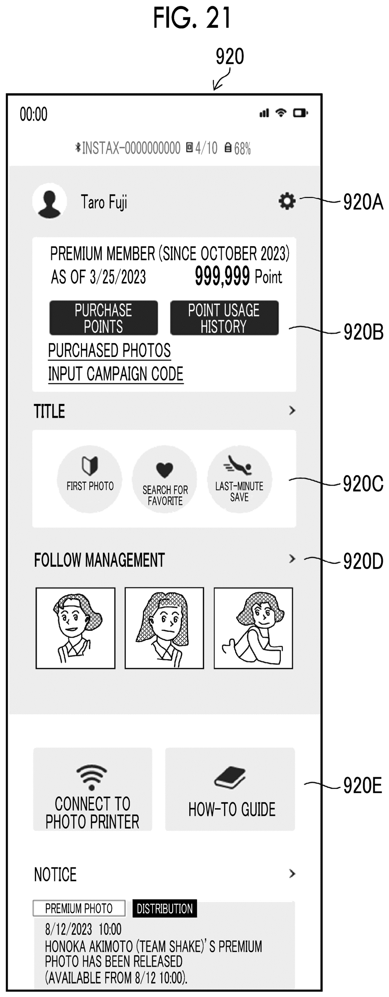

FIG. 21 is a diagram illustrating an example of a personal page (also referred to as a "my page") of the user. In a screen 920 illustrated in the same drawing, a user name is displayed in a region 920A, and in a case where the user taps this portion, the screen transitions to an account edit screen. A region 920B is a region in which the user type (general member/premium member), the points held by the user, and a label for a link to the points purchase or the points utilization record are displayed. A region 920C displays a title acquired by the user. The "title" is awarded in accordance with the user's service usage and is awarded, for example, in a case where the user first purchases and prints the photo, in a case where the user registers the celebrity to follow, or in a case where the user purchases and prints the photo just before the end of the distribution period. In the example illustrated in FIG. 21, the latest three titles are displayed. In a case where the title is not awarded, a message such as "No acquired title" or "Purchase/print the photo to acquire the title!" can be displayed.

A region 920D is a region for displaying a following status of the celebrity, and in a case where the link is tapped, the screen transitions to the screen for each celebrity (for example, see FIG. 13). A region 920E is a region for displaying a link to other functions, and in the example illustrated in FIG. 21, links to the connection (for example, short-range wireless communication) between the user terminal device 300 and the printer 400 (printer) and a usage guide are displayed. A list of notices from the system and a link to the notice are displayed below the region 920E.

### [Management of Celebrity to Be Followed]

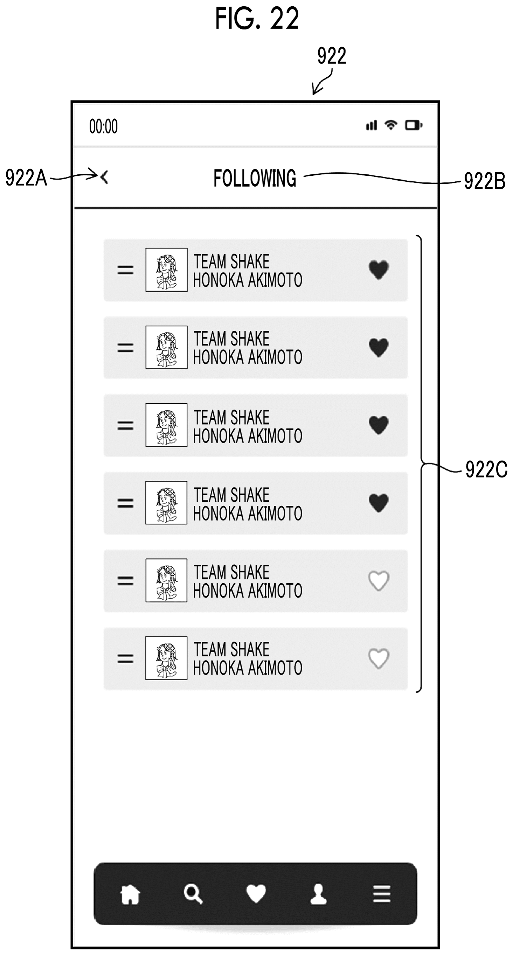

FIG. 22 is a diagram illustrating an example of a management screen (can be reached from the above-described personal page) for a case where a plurality of celebrities (also referred to as "favorite"; a specific person) to be followed are set in the user terminal device 300. In a screen 922 illustrated in FIG. 22, a button 922A is displayed at the top, and the screen can return to the personal page by tapping this button. A title (here, "following") of the page is displayed in a region 922B. A region 922C displays the celebrities being followed in a list, and displays thumbnail images of the celebrities, the full names and the affiliations of the celebrities, the number of posted photos, the number of users who follow the celebrity, an icon indicating whether or not the user is following, and the like. It is preferable that the screen 922 is provided with a function (for example, movement by drag and drop) for the user to change the display order of the celebrities. In addition, it is preferable that the display order changed by this function is also reflected in the list display of the celebrities on other screens.

### [Checking and Editing of Account Information]

FIG. 23 is a diagram illustrating a screen example for checking and editing account information. In a screen 924 illustrated in FIG. 23, a button 924A is provided at the top, and in a case where this button is tapped, the screen returns to the personal page (see FIG. 21) of the user described above. A title (ID/account setting) of the screen is displayed in a region 924B. Below the title, information on an ID (here, an e-mail address), a password, a nickname, a notification setting, and an auto-login is displayed in regions 924C to 924G, and in a case where the button on the right side of each region is tapped, the screen transitions to a screen for editing each item. In a case where a label 924H at the bottom of the screen is tapped, the screen returns to a login screen of the system.

### [Account Creation on Celebrity Side]

FIGS. 24 and 25 are diagrams illustrating examples of an account creation screen on the celebrity side. FIG. 24 illustrates a screen 926 for inputting required items, and in a case where the selection between the individual celebrity and the group celebrity is made in a region 926A at the top, the display content of the screen changes in accordance with the selection. A label "required items" is displayed in a region 926B. Before a profile image (representative image) is selected, a button 926D of "select image" is displayed below a title "profile image" in a region 926C, and in a case where this button is tapped, the screen transitions to an image selection screen. In a case where the image selection is completed, the selected image is displayed below the title. Regions 926E, 926F, and 926G are regions for inputting an account name (idol name or the like) of the celebrity, the Romanized notation of the account name, and the account name, respectively. A region for inputting the self-introduction of the celebrity in text is provided below these regions.

FIG. 25 illustrates a screen 928 for inputting optional items. Regions 928A to 928F are regions for inputting a group name, an assigned color (color assigned to each celebrity; signature color), a birthday, a hometown, a debut date, and a uniform resource locator (URL) of a website, respectively. In addition, a region 928G is a region for inputting URLs of various social networking services (SNS), and a plurality of regions may be provided to correspond to a plurality of SNS. A button 928H for confirmation is always displayed (stays fixed while scrolling) at the bottom. In a case where all of the required items are not input or an error remains, the button 928H is disabled, and in a case where the button 928H is tapped in a state where the input is completed and the error is resolved, the screen transitions to a screen for the account creation completion.

### [Photo Posting]

FIG. 26 is a diagram illustrating an example of a screen for posting the photo (normal photo or premium photo) by the celebrity terminal device 200. In a case where there is a "notice" from the system that requires a response on the celebrity side in a screen 930, a message is displayed in a region 930A, and in a case where the message is tapped, the screen transitions to a notice list screen. The "notice that requires a response" is, for example, "There is a problem with the image or the comment of the time-limited photo (photo that can be purchased and printed by the user only for a limited period of time) that the celebrity has tried to post, and the post has been returned to the celebrity by the manager's comment".

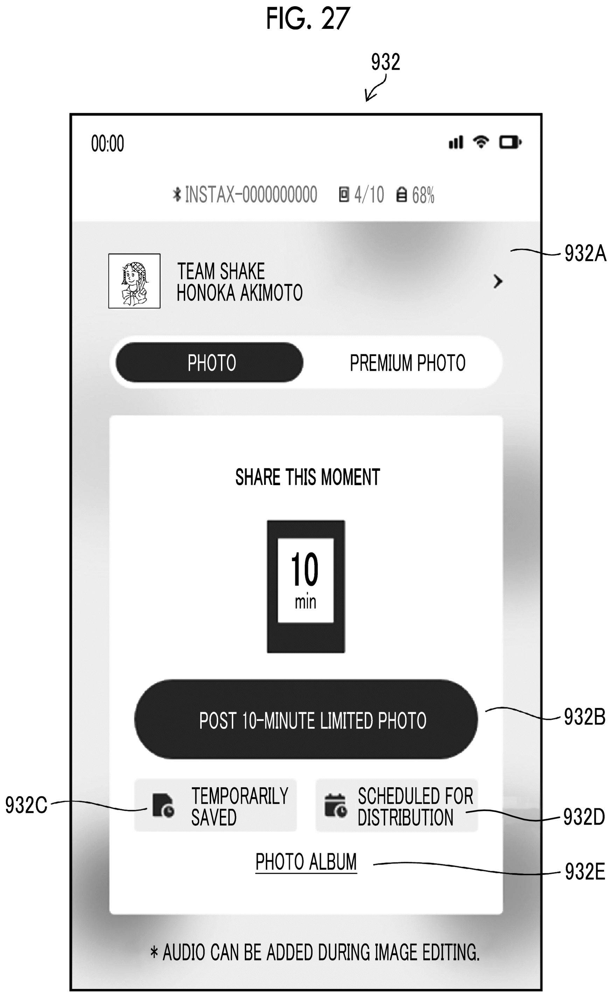

In a case where there is no "notice that requires a response", a screen as illustrated in FIG. 27 is displayed. In a screen 932, the account name of the celebrity, the group name, the representative image (profile image), and the like are displayed in a region 932A at the top, and in a case where this region is tapped, the screen transitions to the screen for checking and editing the account information (for example, see FIG. 23).

The screen 932 illustrated in FIG. 27 is a screen in a case of posting the time-limited photo described above, and in a case where a button 932B is tapped, the screen transitions to a screen for posting 10-minute limited photo (photo that can be purchased and printed only for 10 minutes). Buttons 932C and 932D are buttons for transitioning to a screen for a list of photos temporarily saved and a screen for a list of photos scheduled to be distributed, and a label 932E is a label for transitioning to the photo album. Such a time-limited photo increases the scarcity of the photos and allow fans to feel as though the fans are connected with the celebrity the fans support at that very moment.

### [Photo Distribution Setting]

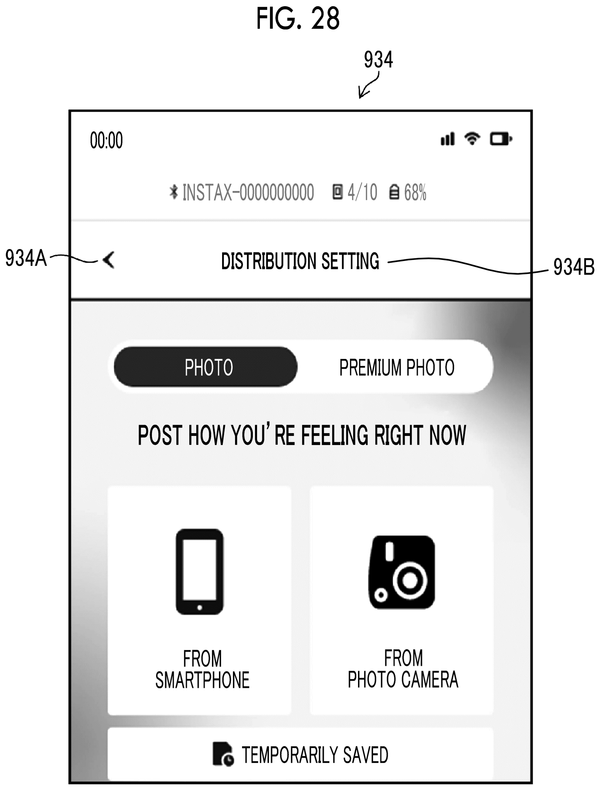

FIG. 28 is a diagram illustrating a screen example for photo distribution setting. A button 934A for returning to the personal page of the celebrity is displayed at the top of a screen 934, and a title ("distribution setting") is displayed in a region 934B. In the example illustrated in FIG. 28, the celebrity side (including the celebrity himself/herself and the manager or a staff member having an account) can post the photo from a smartphone or a photo camera (for example, a digital camera with an instant printer that can be connected to a network). In the present system, a photo with audio can also be posted by the setting on the celebrity side.

### [Detailed Setting of Photo Distribution]

FIG. 29 is a diagram illustrating a screen example (screen example of celebrity terminal device 200) for detailed setting of photo distribution. In FIG. 29, a case where the time-limited photo is distributed will be described. In a screen 936 illustrated in the same drawing, a button 936A for returning to a previous screen (for example, the screen of FIG. 28) is displayed at the top, and a title ("detailed registration") of the screen is displayed in a region 936B. The photo image (state where the photo is printed on the instant film) to be posted is displayed in a region 936C with a frame, and in a case where a label 936D below this region is tapped, the screen transitions to an edit screen, and the photo image can be edited (enlarged, reduced, rotated, moved, trimmed, and the like). A button 936E is displayed at the bottom of the screen, and in a case where this button is tapped, the screen transitions to the check screen. It is preferable that the button 936E is disabled in a case where all of the required items are not input.

In addition, in the present embodiment, the content that can be set in detail may be changed between the normal photo and the premium photo. For example, in a case of the premium photo, as illustrated in FIG. 29, the signature color and the comment may be added to the image.

### [Display of List of Photos Pending Approval]

In the image distribution system 10, the photo posted by the celebrity may be uploaded and published after being approved by a person having approval authority, such as the manager. FIG. 30 is a diagram illustrating a screen example of list display of photos pending approval. In a screen 938 illustrated in the same drawing, a button 938A for returning to the previous page (for example, the personal page of the manager) is provided at the top of the screen, and a title ("list of photos pending approval") of the page is displayed in a region 938B. A region 938C is a region for switching the list display target, and, in an initial state, "all" is selected, and the photos pending approval of all celebrities handled by the manager or the like are displayed in a region 938D at the bottom of the screen. In a case where the image of each celebrity is tapped in the region 938C, only the photo pending approval by the celebrity is displayed in the region 938D. The region 938D is a region in which the photo pending approval is displayed, and for example, the image used in the photo, the distribution time, the full name or the designation of the celebrity, the group name, and the comment or the message by the celebrity are displayed in order of time close to a publication time. In a case of the premium photo, display indicating the fact (in the example illustrated in FIG. 30, addition of an icon displayed as "Premium") is performed.

In a case where a region of any photo is tapped in a state where the photos are displayed in a list, the screen transitions to a posting content approval screen (for example, see FIG. 31).

### [Approval of Posting Content]

FIG. 31 is a diagram illustrating an example of the posting content approval screen. In a screen 940 illustrated in the same drawing, a button 940A for returning to the previous screen (the list display screen of the photos pending approval or the screen of the notice of the request for photo approval) is displayed at the top, and a title ("posting approval") of the screen is displayed in a region 940B. The following regions are regions for checking the posting content. The number of points necessary for printing the photo is displayed in a region 940C, and the posted image is displayed in a region 940D. The posting image is the image (with a frame) used in the photo, the signature color, the comment, the distribution date and time, the points acquired by the user in a case where the photo is printed, or the like, but other information may be displayed.

FIG. 32 is a diagram illustrating a screen example for the person having approval authority to make the approval or a correction request. A screen 942 may be displayed below the screen 940 described above. In a case where a button 942A is tapped, the photo is distributed (added to the list of photos scheduled to be distributed depending on the distribution time), and in a case where a button 942B is tapped, the screen transitions to a correction request screen (for example, see FIG. 33).

### [Correction Request for Posting Content]

FIG. 33 is a diagram illustrating a screen example for the person having approval authority to make the correction request for the posting content. In a screen 944 illustrated in the same drawing, a button 944A for returning to the previous screen (for example, the posting content check screen of FIG. 31 or the like) is displayed at the top, and a title ("correction request content input") of the screen is displayed in a region 944B. A region 944C is a region for inputting the correction request for the celebrity (in the example illustrated in FIG. 33, "Please correct the posting time to 20:00"). In a case where the button 944D is tapped, the correction request is transmitted to the celebrity.

### [Preview Screen of Photo]

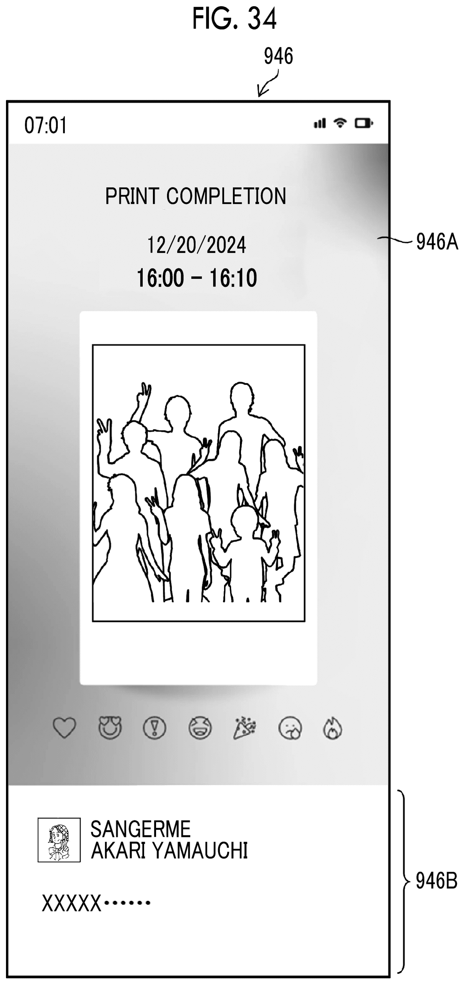

FIG. 34 is a diagram illustrating an example of a preview screen of the photo. In a screen 946 illustrated in the same drawing, the screen at the time of printing completion displayed on the user terminal device 300 is displayed in a region 946A. The displayed content is, for example, the background color (displayed in a color selected by the celebrity or the like), the distribution date and time, the image used in the photo (with a frame), the reaction button (displayed but not operated), the full name or the designation of the poster, the group name, the representative image, and the comment, but the display may be different from this.

While the embodiments of the present invention have been described above, the present invention is not limited to the above-described aspects and can be modified in various manners. Explanation of References

10: image distribution system
100: server apparatus
102: processor
102A: account management unit
102B: image extraction unit
102C: image processing unit
102D: input/output control unit
108: operation unit
110: speaker
112: display
114: input/output interface
116: recording device
118: bus
160: recording device
200: celebrity terminal device
202: camera
204: microphone
206: speaker
208: display
210: operation unit
212: processor
214: communication interface
216: memory card
218: flash memory
300: user terminal device
302: camera
304: microphone
306: speaker
308: display
310: operation unit
312: processor
314: communication interface
316: memory card
318: flash memory
400: printer
800: image
802: image
806: image
808: image
810: image
810A: region
812: image
900: screen
900A: region
900B: region
900C: label
900D: region
900E: region
902: screen
902A: region
902B: region
902C: label
902D: region
902E: region
904: screen
904B: region
904C: region
904D: region
905: screen
905A: region
905C: region
905D: region
905E: region
906: screen
906A: region
906B: region
906C: region
906D: region
906E: region
906F: label
906G: region
906H: region
906I: region
908: screen
908A: region
908B: region
908C: region
908D: label
908E: checkbox
908F: region
910: screen
910A: region
910B: reaction button
912: screen
912A: region
912B: region
912C: region
912D: reaction button
912E: region
912F: region
914: screen
914A: region
914B: region
914C: region
914D: region
916: screen
916A: button
916B: region
916C: region
916D: button
918: screen
918A: search box
920: screen
920A: region
920B: region
920C: region
920D: region
920E: region
922: screen
922A: button
922B: region
922C: region
924: screen
924A: button
924B: region
924C: region
924D: region
924E: region
924F: region
924G: region
924H: label
926: screen
926A: region
926B: region
926C: region
926D: button
926E: region
926F: region
926G: region
928: screen
928A: region
928B: region
928C: region
928D: region
928E: region
928F: region
928G: region
928H: button
930: screen
930A: region
932: screen
932A: region
932B: button
932C: button
932D: button
932E: label
934: screen
934A: button
934B: region
936: screen
936A: button
936B: region
936C: region
936D: label
936E: button
938: screen
938A: button
938B: region
938C: region
938D: region
940: screen
940A: button
940B: region
940C: region
940D: region
942: screen
942A: button
942B: button
944: screen
944A: button
944B: region
944C: region
944D: button
946: screen
946A: region

## Claims

1. An image transmission/reception system comprising:
an image transmission-side device;
an image reception-side device; and
a transmission/reception control device,
wherein the image transmission-side device captures an image of a subject to acquire the image, and transmits the acquired image to the transmission/reception control device,
the image reception-side device receives input of identification information of a specific person who is a person whose image a user of the image reception-side device desires to view, and transmits the identification information of the specific person to the transmission/reception control device, and
based on
the identification information of the specific person,
identification information of a person who captures the image,
identification information of the subject captured in the image, and
attribute information of the user of the image reception-side device,
the transmission/reception control device extracts an image from the image received from the image transmission-side device, and displays the extracted image on the image reception-side device.

2. The image transmission/reception system according to claim 1,
wherein the transmission/reception control device extracts an image in which the specific person is captured as a subject by comparing the identification information of the specific person with the identification information of the subject captured in the image.

3. The image transmission/reception system according to claim 2,
wherein the transmission/reception control device recognizes a subject in the received image by using a recognizer constructed by a machine learning algorithm, and acquires identification information of the subject by the recognition.

4. The image transmission/reception system according to any one of claims 1 to 3,
wherein the transmission/reception control device extracts an image in which the specific person is the person who captures the image by comparing the identification information of the person who captures the image with the identification information of the specific person.

5. The image transmission/reception system according to any one of claims 1 to 3,
wherein the image transmission-side device receives input of the identification information of the person who captures the image, and transmits the identification information of which the input is received and the image to the transmission/reception control device in association with each other.

6. The image transmission/reception system according to any one of claims 1 to 3,
wherein the transmission/reception control device sets a priority for the extracted image based on whether or not identification information of a subject in the extracted image matches the identification information of the specific person, and displays the extracted image in accordance with the priority.

7. The image transmission/reception system according to claim 6,
wherein the transmission/reception control device increases the priority in a case where the identification information of the person who captures the image matches the identification information of the specific person, as compared with a case where the identification information of the person who captures the image does not match the identification information of the specific person.

8. The image transmission/reception system according to any one of claims 1 to 3,
wherein the transmission/reception control device processes the image based on the attribute information of the user, and displays the processed image on the image reception-side device.

9. The image transmission/reception system according to any one of claims 1 to 3,
wherein the transmission/reception control device displays the image on the image reception-side device in different forms before and after the user decides to purchase the image.

10. The image transmission/reception system according to any one of claims 1 to 3,
wherein the image transmission-side device receives input of a period during which the image is displayed on the image reception-side device, and transmits the period to the transmission/reception control device in association with the image, and
the transmission/reception control device displays the image on the image reception-side device during the period.

11. The image transmission/reception system according to claim 10,
wherein the transmission/reception control device displays the image on the image reception-side device during the period in different forms in accordance with an elapsed time from a start of the period.

12. The image transmission/reception system according to claim 10,
wherein the transmission/reception control device displays an image that is purchased and printed by the user on the image reception-side device even after a lapse of the period.

13. The image transmission/reception system according to any one of claims 1 to 3,
wherein the transmission/reception control device displays the image on the image reception-side device in different forms in accordance with an attribute of the user.

14. The image transmission/reception system according to any one of claims 1 to 3,
wherein the image transmission-side device receives input of additional information for the image, and transmits the additional information to the transmission/reception control device, and
the transmission/reception control device displays the image and the additional information on the image reception-side device in association with each other.

15. The image transmission/reception system according to any one of claims 1 to 3,
wherein the image transmission-side device transmits an image for which transmission is approved by a person having approval authority to the transmission/reception control device.

16. The image transmission/reception system according to any one of claims 1 to 3,
wherein the transmission/reception control device designates an allowable number of prints for an image purchased by the user, and
the image reception-side device causes a printer to print the image purchased by the user within the allowable number of prints.

17. The image transmission/reception system according to claim 16,
wherein the image reception-side device causes a printer that uses an instant film to print the image purchased by the user.

18. The image transmission/reception system according to any one of claims 1 to 3,
wherein the image reception-side device receives input of a message for an image purchased by the user, and transmits the message to the transmission/reception control device, and
the transmission/reception control device displays the message on the image transmission-side device in association with the image.

19. An operation method of an image transmission/reception system including an image transmission-side device, an image reception-side device, and a transmission/reception control device, the operation method comprising:
causing the image transmission-side device to capture an image of a subject to acquire the image, and transmit the acquired image to the transmission/reception control device;
causing the image reception-side device to receive input of identification information of a specific person who is a person whose image a user of the image reception-side device desires to view, and transmit the identification information of the specific person to the transmission/reception control device; and
causing the transmission/reception control device, based on
the identification information of the specific person,
identification information of a person who captures the image,
identification information of the subject captured in the image, and
attribute information of the user of the image reception-side device,
to extract an image from the image received from the image reception-side device, and display the extracted image on the image reception-side device.

20. A program for operating a terminal device and causing the terminal device to execute:
a function of receiving input of identification information of a specific person who is a person whose image a user of the terminal device desires to view, and transmitting the identification information of the specific person to a transmission/reception control device; and
a function of displaying an image extracted by the transmission/reception control device based on the identification information of the specific person, identification information of a person who captures the image, identification information of a subject captured in the image, and attribute information of the user on the terminal device.

21. The program according to claim 20,
wherein the program causes the terminal device to further execute a function of causing a printer to print an image purchased by the user within an allowable number of prints designated by the transmission/reception control device.

22. A non-transitory computer-readable recording medium on which the program according to claim 20 or 21 is recorded.
